# EUROPÄISCHE PATENTSCHRIFT

(11) **EP 4 003 616 B1**
(45) Veröffentlichungstag und Bekanntmachung des Hinweises auf die Patenterteilung: **13.03.2024**
(21) Anmeldenummer: 19749691.2
(22) Anmeldetag: 31.07.2019
(51) Int. Cl.: B08B 3/02, B08B 13/00, B08B 3/00, G06F 3/04847

(54) **HOCHDRUCKREINIGUNGSSYSTEM UND VERFAHREN ZUM BETREIBEN EINES HOCHDRUCKREINIGUNGSSYSTEMS**
HIGH-PRESSURE CLEANING SYSTEM AND METHOD FOR OPERATING A HIGH-PRESSURE CLEANING SYSTEM
SYSTÈME DE NETTOYAGE À HAUTE PRESSION ET PROCÉDÉ PERMETTANT DE FAIRE FONCTIONNER UN SYSTÈME DE NETTOYAGE À HAUTE PRESSION

(43) Veröffentlichungstag der Anmeldung: 01.06.2022
(73) Patentinhaber: Alfred Kärcher SE & Co. KG, 71364 Winnenden (DE)
(72) Erfinder: FRIEDERICH, Andreas, 71522 Backnang (DE); ALBIEZ, Michael, 70372 Stuttgart (DE); MASEK, Tobias, 71134 Aidlingen (DE); SPENGLER, Timo, 71263 Weil der Stadt (DE); MOHR, Angelika, 70186 Stuttgart (DE)
(74) Vertreter: DTS Patent- und Rechtsanwälte Schnekenbühl und Partner mbB
(86) Internationale Anmeldenummer: PCT/EP2019/070673
(87) Internationale Veröffentlichungsnummer: WO 2021/018395

(56) Entgegenhaltungen:
- WO-A1-2016/066209
- WO-A1-2016/184529
- US-A1- 2013 214 059

## Beschreibung

Die vorliegende Erfindung bezieht sich auf ein Hochdruckreinigungssystem, umfassend ein Hochdruckreinigungsgerät, das ein Pumpaggregat aufweist, mindestens ein Zubehörteil, das in Strömungsverbindung mit einem Hochdruckausgang des Pumpaggregates steht oder bringbar ist, wobei das Hochdruckreinigungsgerät mit mindestens einem veränderbaren Betriebsparameter betreibbar ist, sowie ferner umfassend eine Eingabeeinheit, mindestens eine mit der Eingabeeinheit gekoppelte Steuereinheit, und eine mit der mindestens einen Steuereinheit gekoppelte Ausgabeeinheit, wobei über die Eingabeeinheit ein zu reinigender Gegenstand vorgebbar ist und von der mindestens einen Steuereinheit abhängig von der Vorgabe an der Ausgabeeinheit eine Reinigungsempfehlung bereitstellbar ist.

Außerdem bezieht sich die vorliegende Erfindung auf ein Verfahren zum Betreiben eines derartigen Hochdruckreinigungssystems.

Ein Hochdruckreinigungssystem der eingangs genannten Art, gemäß dem Oberbegriff des Anspruchs 1, ist in der WO 2016/066209 A1 beschrieben. Dabei kann der Benutzer die Art des zu reinigenden Gegenstandes mittels eines Piktogrammes an der Eingabeeinheit auswählen. Hiervon abhängig wird ein Betriebsparameter des Hochdruckreinigungsgerätes eingestellt, beispielsweise der Druck oder der Volumenstrom der Reinigungsflüssigkeit. An der Ausgabeeinheit wird eine für die Reinigung des Gegenstandes empfohlene Austragseinheit symbolisch dargestellt.

Bei einer andersartigen Ausführungsform eines Hochdruckreinigungssystems, das ebenfalls in der WO 2016/066209 A1 beschrieben ist, kann der Benutzer über die Eingabeeinheit den Wert eines Betriebsparameters vorgeben. Die Vorgabe des Benutzers wird am Hochdruckreinigungsgerät eingestellt, um die Eigenschaften der Reinigungsflüssigkeit zu verändern und das Reinigungsergebnis zu beeinflussen.

In der US 2013/0214059 A1 ist ein Hochdruckreinigungssystem beschrieben. Dabei kann der Benutzer, wie in der WO 2016/066209 A1 beschrieben, an der Eingabeeinheit mittels eines Piktogrammes die Art eines zu reinigenden Gegenstandes vorgeben. Hiervon abhängig wird mindestens ein Betriebsparameter des Hochdruckreinigungsgerätes eingestellt. Allerdings wird an der Ausgabeeinheit keine Empfehlung einer Austragseinheit ausgegeben. Des Weiteren ist in der US 2013/0214059 A1 eine Ausführungsform eines Hochdruckreinigungssystems beschrieben, bei dem der Benutzer an einer Bedieneinheit eine Austragseinheit auswählt, die eine für die Reinigungsaufgabe geeignete Düse umfasst. Mittels eines Antriebes kann die gewählte Austragseinheit in Strömungsverbindung mit dem Hochdruckausgang gebracht werden.

Bekannt sind ferner Anleitungen zum Einsatz eines Hochdruckreinigungssystems, bei dem in gedruckter Form symbolisch unterschiedliche Arten zu reinigender Gegenstände dargestellt sind. Verknüpft mit diesen Darstellungen sind Hinweise zur Benutzung des Hochdruckreinigungsgerätes. Die Hinweise umfassen die Darstellung einer für die Reinigung des Gegenstandes geeigneten Austragseinheit sowie den Vorschlag, welche Druckstufe zu verwenden ist.

Ein weiteres Hochdruckreinigungssystem ist in der WO 2016/184529 A1 beschrieben.

Aufgabe der vorliegenden Erfindung ist es, ein Hochdruckreinigungssystem und ein Verfahren zum Betreiben eines Hochdruckreinigungssystems bereitzustellen, das eine höhere Vielseitigkeit aufweist.

Diese Aufgabe wird durch ein erfindungsgemäßes Hochdruckreinigungssystem gelöst, umfassend ein Hochdruckreinigungsgerät, das ein Pumpaggregat aufweist, mindestens ein Zubehörteil, das in Strömungsverbindung mit einem Hochdruckausgang des Pumpaggregates steht oder bringbar ist, wobei das Hochdruckreinigungsgerät mit mindestens einem veränderbaren Betriebsparameter betreibbar ist, eine Eingabeeinheit, mindestens eine mit der Eingabeeinheit gekoppelte Steuereinheit und eine mit der mindestens einen Steuereinheit gekoppelte Ausgabeeinheit, wobei über die Eingabeeinheit ein zu reinigender Gegenstand vorgebbar ist und die Steuereinheit derart ausgebildet ist, dass von der mindestens einen Steuereinheit abhängig von der Vorgabe an der Ausgabeeinheit eine Reinigungsempfehlung bereitgestellt wird, umfassend einen Hinweis zur Verwendung eines Zubehörteils und/oder den Wert mindestens eines Betriebsparameters, und wobei die Steuereinheit weiter derart ausgebildet ist, dass an der Ausgabeeinheit verknüpft mit der Reinigungsempfehlung mindestens ein Interaktionselement für den Benutzer bereitgestellt wird, zum Übermitteln von Interaktionsinformationen an die mindestens eine Steuereinheit, abhängig von der Reinigungsempfehlung.

Die Vielseitigkeit des erfindungsgemäßen Hochdruckreinigungssystems ergibt sich dadurch, dass über das mindestens eine Interaktionselement die Möglichkeit für den Benutzer gegeben ist, auf die ausgegebene Reinigungsempfehlung Interaktionsinformationen an die mindestens eine Steuereinheit zu übertragen. Die Beschaffenheit des mindestens einen Interaktionselementes und die an die mindestens eine Steuereinheit übertragbaren Interaktionsinformationen können abhängig von der Reinigungsempfehlung sein. Vorzugsweise kann dadurch bei einer bevorzugten Ausführungsform ein Dialog zwischen dem Benutzer und mindestens einer Steuereinheit aufgebaut werden, indem der Benutzer auf die dynamische Reinigungsempfehlung reagieren kann und diese vorteilhafterweise, falls erforderlich, für seine Bedürfnisse anpassen und insbesondere verfeinern kann. Dies erlaubt es, insbesondere mittels eines dialogartigen oder Workflow-artigen Informationsaustausches zwischen dem Benutzer und dem Hochdruckreinigungssystem eine im Hinblick auf die Reinigungsaufgabe bestmögliche Reinigungsempfehlung auszusprechen, wobei der Benutzer vorzugsweise zugleich zur Durchführung der Reinigung angeleitet werden kann. Alternativ oder ergänzend ist günstigerweise vorgesehen, dass auf die Betätigung des Interaktionselementes Reinigungshinweise, beispielsweise Workflow-artig oder dialogartig, von der mindestens einen Steuereinheit an der Ausgabeeinheit bereitgestellt werden, die den Benutzer bei der Verwendung des Hochdruckreinigungssystems im Hinblick auf eine bestmögliche Reinigung anleiten.

Die Ausgabeeinheit ist vorteilhafterweise eine Anzeigeeinheit oder umfasst eine solche, wobei bevorzugt eine Bildanzeige vorgesehen ist und die Reinigungsempfehlung sowie das mindestens eine Interaktionselement visuell dargestellt werden können.

Die Reinigungsempfehlung für das Zubehörteil und/oder der Wert des mindestens einen Betriebsparameters kann zum Beispiel in graphischer Form, Textform und/oder durch Sprachausgabe bereitstellbar sein und kann insbesondere graphische Elemente und/oder Text und/oder Audioelemente umfassen.

Beispielsweise ist das mindestens eine Interaktionselement in Gestalt einer Schaltfläche, eines Auswahlelementes oder eines Dreh-/ oder Schiebereglers an der Ausgabeeinheit bereitstellbar und insbesondere darstellbar. Durch Betätigen der Schaltfläche, Auswahl einer am Auswahlelement bereitgestellten Aktion oder Einstellen des Reglers, mit dem beispielsweise der Wert mindestens eines Betriebsparameters verändert werden kann, kann der Benutzer mit dem Hochdruckreinigungssystem interagieren.

Bei einer bevorzugten Ausführungsform kann vorgesehen sein, dass die Ausgabeeinheit akustisch ausgestaltet ist. "Interaktionselement" ist dementsprechend nicht auf ein visuell dargestelltes und zum Beispiel haptisch betätigbares Element beschränkt. Die Reinigungsempfehlung kann an der akustischen Ausgabeeinheit zum Beispiel durch Sprachausgabe bereitgestellt werden.

In entsprechender Weise kann vorgesehen sein, dass das mindestens eine Interaktionselement durch eine Sprachausgabe mit einer Möglichkeit zur Erwiderung auf die Sprachausgabe bereitstellbar ist. So kann eine Interaktion zum Beispiel mittels Spracheingabe durch den Benutzer ermöglicht werden.

Vorgesehen sein kann, dass das mindestens eine Interaktionselement durch optische Verknüpfung eines Anzeigeelementes mit einem physischen Betätigungselement an der Eingabeeinheit bereitstellbar ist. Beispielsweise ist ein physisches Betätigungselement in Gestalt einer Taste oder dergleichen an der Eingabeeinheit vorgesehen. Dieses Betätigungselement kann mit einem Anzeigeelement, das an der Ausgabeeinheit darstellbar ist, als "Softkey" visuell verknüpft werden. Beispielsweise wird der Benutzer darauf hingewiesen, dass eine bestimmte Interaktion durch Betätigen des Betätigungselementes ermöglicht wird.

Vorteilhaft ist es, wenn die Reinigungsempfehlung einen Hinweis zur Verwendung eines Zubehörteils zusammen mit dem Wert mindestens eines Betriebsparameters umfasst. Der Benutzer erhält auf diese Weise eine umfassende, wertvolle Empfehlung, um ein möglichst gutes Reinigungsergebnis zu erzielen.

Insbesondere kann vorgesehen sein, dass die Reinigungsempfehlung einen Hinweis betreffend die Werte mehrerer Betriebsparameter umfassen kann, ebenfalls zur Erzielung eines möglichst guten Reinigungsergebnisses.

Vorgesehen sein kann insbesondere, dass mehr als ein Interaktionselement bereitstellbar ist. Die Interaktionselemente können hinsichtlich ihrer Wirkung unterschiedlich beschaffen sein, so dass je nach Betätigung unterschiedliche Interaktionsinformationen an die Steuereinheit übertragbar sind. Im Kontext der vorliegenden Offenbarung kann dementsprechend die Formulierung "das mindestens eine Interaktionselement" als "mindestens ein Interaktionselement des mindestens einen Interaktionselementes" aufgefasst werden.

Vorgesehen sein kann, dass das Hochdruckreinigungssystem mehr als eine Steuereinheit umfasst. Dementsprechend kann im Kontext der vorliegenden Offenbarung die Formulierung "die mindestens eine Steuereinheit" als "mindestens eine Steuereinheit der mindestens einen Steuereinheit" aufgefasst werden.

Das mindestens eine Interaktionselement umfasst vorzugsweise ein Bestätigungselement, durch dessen Betätigung eine Bestätigungsinformation des Benutzers an die mindestens eine Steuereinheit übertragbar ist. Durch Betätigen des Bestätigungselementes kann der Benutzer der Steuereinheit auf diese Weise mitteilen, dass er von der Reinigungsempfehlung Kenntnis genommen hat und diese insbesondere quittiert. Gewissermaßen akzeptiert der Benutzer mittels des Interaktionselementes die Reinigungsempfehlung durch die Steuereinheit.

Günstig ist es, wenn die Reinigungsempfehlung einen Hinweis betreffend den Wert mindestens eines Betriebsparameters umfasst und wenn das Hochdruckreinigungsgerät bei Bestätigung durch das mindestens eine Interaktionselement auf den Wert des mindestens einen Betriebsparameters einstellbar ist. Der Benutzer kann auf die Reinigungsempfehlung reagieren und den vorgeschlagenen Wert mindestens eines Betriebsparameters akzeptieren. Das Hochdruckreinigungsgerät wird benutzerfreundlich auf diesen Wert eingestellt.

Es versteht sich, dass erforderlichenfalls Informationen zwischen der Eingabeeinheit und dem Hochdruckreinigungsgerät ausgetauscht werden können. Beispielsweise wird eine Interaktionsinformation, die an der Eingabeeinheit vorgenommen wird, an eine Steuereinheit übertragen und von dieser an das Hochdruckreinigungsgerät direkt oder indirekt übertragen. Alternativ kann die Information von der Eingabeeinheit zum Beispiel an eine im Hochdruckreinigungsgerät angeordnete Steuereinheit übertragen werden.

Von Vorteil ist es, wenn die Reinigungsempfehlung einen Hinweis betreffend den Wert mindestens eines Betriebsparameters umfasst und wenn das mindestens eine Interaktionselement ein Änderungselement ist, über das vom Benutzer der Wert des mindestens einen Betriebsparameters veränderbar ist. Über das Änderungselement, beispielsweise ausgebildet als Dreh-/ oder Schieberegler oder als Auswahlelement, kann der Benutzer an das Hochdruckreinigungssystem die Rückmeldung unterbreiten, dass er einen andersartigen Wert für den mindestens einen Betriebsparameter für vorteilhaft hält.

Günstig ist es, wenn bei der zuletzt genannten Ausführungsform eine diesbezügliche Information an die mindestens eine Steuereinheit übertragen und das Hochdruckreinigungsgerät auf den veränderten Wert des mindestens einen Betriebsparameters einstellbar ist. Dies erhöht die Benutzerfreundlichkeit des Hochdruckreinigungssystems. Wie vorstehend erläutert, können erforderlichenfalls Informationen an das Hochdruckreinigungsgerät übertragen werden.

Von Vorteil ist es, wenn die Reinigungsempfehlung einen Hinweis betreffend den Wert mindestens eines Betriebsparameters umfasst und wenn das Hochdruckreinigungsgerät bei Ausbleiben einer Betätigung des mindestens einen Interaktionselementes für eine vorgegebene oder vorgebbare Zeit nach Bereitstellen der Reinigungsempfehlung auf den Wert des mindestens einen Betriebsparameters eingestellt wird. Dem Benutzer ist die Möglichkeit gegeben, über das mindestens eine Interaktionselement eine Rückmeldung an das Hochdruckreinigungssystem zu geben. Günstig ist es im vorliegenden Fall allerdings, wenn nach Zeitablauf ohne Rückmeldung der Wert des mindestens einen Betriebsparameters ohne weiteres Zutun des Benutzers, gewissermaßen automatisch, eingestellt wird.

Als vorteilhaft kann es sich erweisen, wenn mehrere Reinigungsempfehlungen verbunden mit einem jeweiligen mindestens einen Interaktionselement bereitstellbar sind und wenn die Reinigungsempfehlungen zumindest einen Hinweis betreffend die Verwendung eines Zubehörteils umfassen, wobei sich die Zubehörteile verschiedener Reinigungsempfehlungen voneinander unterscheiden. Es kann in der Praxis durchaus vorgesehen sein, dass zum Reinigen eines bestimmten Gegenstandes voneinander unterschiedliche Zubehörteile eingesetzt werden können. Dementsprechend kann die mindestens eine Steuereinheit mehr als eine Reinigungsempfehlung bereitstellen.

In letzterem Fall ist es von Vorteil, wenn das jeweilige mindestens eine Interaktionselement ein Bestätigungselement oder ein Auswahlelement ausbildet, bei dessen Betätigung eine Information zur Verwendung des mit diesem Interaktionselement verknüpften Zubehörteils an die Steuereinheit übertragbar ist. Dies gibt die Möglichkeit für den Benutzer, der Steuereinheit mitzuteilen, dass er eines der Zubehörteile für die Reinigung ausgewählt. Günstigerweise wird dabei über die Interaktion der Wert mindestens eines Betriebsparameters bereitgestellt. Hierbei kann vorgesehen sein, dass der Benutzer den vorgeschlagenen Wert des Betriebsparameters bestätigt oder eigenständig einen Wert überträgt. In der Praxis kann es in der Tat so sein, dass Werte von Betriebsparametern für unterschiedliche, jeweils zur Reinigung des Gegenstandes geeigneten Zubehörteilen voneinander unterschiedlich sein können.

Insgesamt ist es von Vorteil, wenn mittels des mindestens einen Interaktionselementes der Wert mindestens eines Betriebsparameters veränderbar ist.

Günstig ist es, wenn das Hochdruckreinigungsgerät auf den Wert des mindestens einen Betriebsparameters einstellbar ist, auch ohne vorherige Bestätigung oder Änderung durch den Benutzer. Dies ermöglicht eine Einstellung des Hochdruckreinigungsgerätes auf den Wert gemäß der Reinigungsempfehlung ohne Zutun des Benutzers und somit gewissermaßen automatisch, wodurch die Benutzerfreundlichkeit des Hochdruckreinigungssystems gesteigert wird. Es kann vorgesehen sein, dass die Einstellung des Hochdruckreinigungsgerätes direkt und ohne Abwarten einer Zeitdauer erfolgt, wie dies vorher beschrieben wurde.

Das mindestens eine Interaktionselement kann ein Aufforderungselement umfassen, auf dessen Betätigung eine Aufforderung an die Steuereinheit übertragbar ist, eine andersartige Reinigungsempfehlung bereitzustellen. Beispielsweise wird dem Benutzer ein Zubehörteil vorgeschlagen, das er selbst kraft seiner Erfahrungen für weniger gut geeignet hält. Mittels des Interaktionselementes kann der Benutzer um eine andersartige Reinigungsempfehlung bitten. Alternativ kann vorgesehen sein, dass der Benutzer nicht im Besitz des vorgeschlagenen Zubehörteils ist und um Unterbreitung einer neuen Reinigungsempfehlung mit einem Alternativvorschlag für das Zubehörteil bittet.

Vorgesehen sein kann, dass die Reinigungsempfehlung einen Hinweis betreffend die Verwendung eines Zubehörteils umfasst, und wenn das mindestens eine Interaktionselement ein Erwerbselement umfasst, auf dessen Betätigung ein Erwerbswunsch des Benutzers betreffend das Zubehörteil an eine räumlich entfernte Datenverarbeitungseinrichtung übertragbar ist. Beispielsweise kann der Benutzer in dem zuletzt genannten Fall, bei dem er nicht im Besitz des vorgeschlagenen Zubehörteils ist, einen Erwerbswunsch übertragen, das vorgeschlagene Zubehörteil zu erwerben. Die mindestens eine Steuereinheit kann den Erwerbswunsch an eine Datenverarbeitungseinrichtung übermitteln. Dort kann der Erwerbswunsch beispielsweise automatisch verarbeitet werden, um einen Versand des Zubehörteils an den Benutzer in die Wege zu leiten.

Der mindestens eine Betriebsparameter kann vorteilhafterweise manuell vom Benutzer am Hochdruckreinigungsgerät oder an einer Bedieneinheit desselben eingestellt werden.

Vorgesehen sein kann, dass der Wert mindestens eines Betriebsparameters während des Betriebs des Hochdruckreinigungsgerätes steuerbar und/oder regelbar ist.

Günstigerweise ist das mindestens eine Interaktionselement zusammen mit der Reinigungsempfehlung an der Ausgabeeinheit bereitstellbar. Dies erleichtert dem Benutzer die Handhabung des Hochdruckreinigungssystems.

Vorgesehen sein kann, dass das mindestens eine Interaktionselement erst nach Anweisung des Benutzers über die Eingabeeinheit oder nach Ablauf einer vorgebbaren oder vorgegebenen Zeit an der Ausgabeeinheit bereitstellbar ist. Beispielsweise wird dem Benutzer die Reinigungsempfehlung an der Ausgabeeinheit bereitgestellt, und das Interaktionselement wird erst nach Auslösen eines diesbezüglichen Wunsches des Benutzers über die Eingabeeinheit bereitgestellt. Alternativ oder ergänzend kann vorgesehen sein, dass erst nach Zeitablauf das mindestens eine Interaktionselement bereitgestellt wird.

Die Reinigungsempfehlung kann bei einer bevorzugten Ausführungsform eine Mehrzahl von Zubehörteilen umfassen. In der Praxis kann es vorteilhaft sein, wenn der zu reinigende Gegenstand mit unterschiedlichen Zubehörteilen, die nacheinander zum Einsatz kommen, abgereinigt wird. Beispielsweise kann zur Reinigung eines Kraftfahrzeuges zunächst eine Flachstrahldüse zur Vorreinigung eingesetzt werden, anschließend eine Schaumdüse zusammen mit einer Reinigungschemikalie zum Einschäumen des Fahrzeugs, anschließend eine Waschbürste zur Feinreinigung des Fahrzeugs und abschließend eine Flachstrahldüse zum Entfernen der Reinigungsrückstände. Bei der Reinigung eines Fahrrades kann zum Beispiel zunächst eine Flachstrahldüse zur Vorreinigung und anschließend eine Reinigungsbürste zur Feinreinigung eingesetzt werden.

Eine Mehrzahl von Zubehörteilen als Bestandteil der Reinigungsempfehlung kann daher insbesondere zur Verwendung zeitlich nacheinander vorgesehen sein, vorzugsweise gemäß Reinigungshinweisen, die von der mindestens einen Steuereinheit an der Ausgabeeinheit bereitstellbar sind. Wie nachfolgend noch erläutert wird, kann der Benutzer beispielsweise mittels einer über die Ausgabeeinheit bereitgestellten Anleitung mit Reinigungshinweisen zum Einsatz und Wechsel der Zubehörteile angeleitet werden.

Das mindestens eine Interaktionselement kann bei einer bevorzugten Ausführungsform der Erfindung beispielsweise ein Aufforderungselement umfassen, bei dessen Betätigung durch den Benutzer von der mindestens einen Steuereinheit mindestens ein Reinigungshinweis zum Reinigen des Gegenstandes an der Ausgabeeinheit bereitstellbar ist. Die Bereitstellung des Reinigungshinweises erleichtert dem Benutzer die Handhabung des Hochdruckreinigungssystems. Vorzugsweise wird eine den Benutzer bei der Reinigung unterstützende Anleitung bereitgestellt.

Die Anleitung oder der mindestens eine Reinigungshinweis ist zum Beispiel in graphischer Form, in Textform und/oder durch Sprachausgabe bereitstellbar und kann insbesondere graphische Elemente und/oder Text und/oder Audioelemente umfassen.

Die Anleitung oder der mindestens eine Reinigungshinweis kann vorzugsweise Bestandteil der Reinigungsempfehlung sein.

Der mindestens eine Reinigungshinweis kann insbesondere an einer Anzeigeeinheit, als die die Ausgabeeinheit ausgestaltet ist, angezeigt werden.

Von Vorteil kann es sein, wenn aufeinanderfolgende Reinigungshinweise an der Ausgabeeinheit in Form einer Schritt-für-Schritt-Anleitung für den Benutzer zum Reinigen des Gegenstandes bereitstellbar sind. Das Hochdruckreinigungssystem erweist sich dadurch als besonders benutzerfreundlich. In übersichtlicher Weise kann der Benutzer angeleitet werden, um ein möglichst gutes Reinigungsergebnis zu erzielen. Dabei können über die Reinigungshinweise alle erforderlichen Reinigungsschritte erläutert werden.

Günstig kann es sein, wenn die Anleitung mit jeweiligen Interaktionselementen für den Benutzer bereitstellbar ist, wobei bei Betätigung eines Interaktionselementes der Reinigungshinweis gemäß dem nachfolgenden Schritt der Anleitung bereitstellbar ist. Über einen derartigen Workflow der Anleitung wird der Benutzer sukzessive, nach jeweiliger Betätigung eines Interaktionselementes, über den darauffolgenden Schritt zum Reinigen des Gegenstandes informiert.

Reinigungshinweise, die an der Ausgabeeinheit bereitstellbar sind, können bei einer bevorzugten Ausführungsform der Erfindung mindestens eines der folgenden sein oder umfassen:
- Hinweis zum Einstellen des Hochdruckreinigungsgerätes, insbesondere unter Nutzung der Eingabeeinheit. Dabei kann zum Beispiel der Wert mindestens eines Betriebsparameters eingestellt werden;
- Hinweis zum Übertragen eines Wertes eines Betriebsparameters an das Hochdruckreinigungsgerät, beispielsweise des zuvor eingestellten Betriebsparameters;
- Hinweis zur Führung eines Zubehörteils zum Reinigen des Gegenstandes. Dabei können zum Beispiel Bewegungsmuster für das Zubehörteil und/oder der Arbeitsabstand des Zubehörteils vorgeschlagen werden;
- Hinweis zum Anschließen eines Zubehörteils an eine Bedieneinheit oder das Hochdruckreinigungsgerät, zum Trennen eines Zubehörteils und/oder zum Wechsel eines Zubehörteils. Beispielsweise bei vorgeschlagener Benutzung von unterschiedlichen Zubehörteilen nacheinander kann der Benutzer über die Reinigungshinweise informiert werden, dass ein Wechsel des Zubehörteils erforderlich oder zumindest empfohlen ist;
- Hinweis betreffend die abgelaufene oder verbleibende Reinigungszeit, insbesondere die Nutzungsdauer mindestens eines Zubehörteils. Beispielsweise kann der Reinigungshinweis eine Information darüber umfassen, wie lange der Gegenstand mit dem Zubehörteil (zumindest) gereinigt werden sollte. Der Reinigungshinweis kann eine diesbezügliche Information oder, vorteilhaft, einen Timer hierfür umfassen.

Von Vorteil ist es, wenn das Hochdruckreinigungssystem eine Speichereinheit aufweist, in der Reinigungsprofile hinterlegt sind, die, zu reinigenden Gegenständen zugeordnet, Reinigungsempfehlungen aufweisen, die eine Verknüpfung von Zubehörteilen mit einem Wert mindestens eines Betriebsparameters aufweisen. Ein jeweiliges Reinigungsprofil kann einen Satz von einer oder mehreren Reinigungsempfehlungen umfassen, mit einem jeweiligen Zubehörteil und dem Wert mindestens eines Betriebsparameters. Die Reinigungsempfehlungen können an der Speichereinheit gelesen und an der Ausgabeeinheit bereitgestellt werden.

Günstig ist es, wenn der Speichereinheit vom Benutzer Reinigungsprofile durch Interaktion mit dem Hochdruckreinigungssystem über die Eingabeeinheit und die Ausgabeeinheit veränderbar und/oder hinzufügbar sind. Beispielsweise können Reinigungsprofile für unterschiedliche Gegenstände mit Informationen ergänzt werden, die in einer Datenverarbeitungseinrichtung hinterlegt sind. So ist denkbar, dass Reinigungsprofile vom Benutzer durch Interaktion mit dem System heruntergeladen und in der Speichereinheit hinterlegt werden können. Alternativ oder ergänzend kann vorgesehen sein, dass der Benutzer Reinigungsempfehlungen verändern kann.

Die Speichereinheit ist insbesondere mit der mindestens einen Steuereinheit gekoppelt. Denkbar ist, dass die Speichereinheit von der Steuereinheit umfasst ist.

Als Zubehörteil kann bei der bevorzugten Ausdrucksform des Hochdruckreinigungssystems beispielsweise zumindest eines der folgenden vorgesehen sein:
- eine Austragseinheit mit Flachstrahldüse;
- eine Austragseinheit mit Rotordüse;
- eine Austragseinheit mit Niederdruck-Reinigungsmitteldüse, insbesondere zum Ausgeben eines Gemisches der Reinigungsflüssigkeit mit einer Reinigungschemikalie;
- eine Austragsvorrichtung umfassend zwei oder mehr Austragseinheiten, wobei die Reinigungsempfehlung die Nutzung einer bestimmten der Austragseinheiten umfasst;
- ein Flächenreinigungsgerät;
- eine Waschbürste, zum Beispiel mit feststehenden oder beweglichen Reinigungsborsten;
- ein Behälter für eine Reinigungschemikalie, wobei die Reinigungsempfehlung den Einsatz einer derartigen Reinigungschemikalie empfiehlt.

Vorgesehen sein kann, dass das Hochdruckreinigungssystem mehr als eine Eingabeeinheit, mehr als eine Ausgabeeinheit und/oder mehr als eine Steuereinheit umfasst. Es versteht sich, dass mehr als eine Speichereinheit vorgesehen sein kann.

Vorgesehen sein kann dabei, dass die Informationen von unterschiedlichen Steuereinheiten verarbeitet werden. Beispielsweise kann eine Steuereinheit die Reinigungsempfehlung und/oder die Reinigungshinweise an der Ausgabeeinheit bereitstellen. Vom Benutzer durch Betätigen des mindestens einen Interaktionselementes ausgelöste Interaktionsinformationen können an eine andersartige Steuereinheit (der mindestens einen Steuereinheit) übertragen werden.

Vorgesehen sein kann, dass Informationen zwischen zumindest zwei der folgenden Komponenten des Hochdruckreinigungssystems kabellos und/oder kabelgebunden übertragbar sind: Hochdruckreinigungsgerät, Eingabeeinheit, Ausgabeeinheit, mindestens eine Steuereinheit, Bedieneinheit für das Hochdruckreinigungsgerät, mit der Steuereinheit gekoppelte oder von dieser umfasste Speichereinheit, externe Datenverarbeitungseinrichtung.

Als günstig erweist es sich, wenn die Eingabeeinheit, die Ausgabeeinheit und/oder die Steuereinheit eine integrierte Einheit mit einem gemeinsamen Gehäuse oder gemeinsamen Träger ausbilden oder von einer derartigen integrierten Einheit umfasst sind. Dies erleichtert die Handhabbarkeit des Hochdruckreinigungssystems.

Die Eingabeeinheit, die Ausgabeeinheit, die Steuereinheit oder die integrierte Einheit ist bei einer bevorzugten Ausführungsform ein externes Zusatzgerät zum Hochdruckreinigungsgerät oder ist von einem solchen umfasst.

Das Zusatzgerät kann bei einer bevorzugten Ausführungsform portabel sein. Dadurch kann es vom Benutzer während der Reinigung mit sich geführt werden.

Von Vorteil ist es, wenn auf dem externen Zusatzgerät ein ausführbares Benutzeranwendungsprogramm hinterlegt ist, zur Interaktion des Benutzers mit dem Hochdruckreinigungssystem. Das Benutzeranwendungsprogramm ist beispielsweise eine intuitiv verwendbare App, um den Benutzer die Interaktion mit dem Hochdruckreinigungssystem zu erleichtern. Beispielsweise wird der vorstehend beschriebene Workflow mit der Schritt-für-Schritt-Anleitung zum Reinigen des Gegenstandes von der App bereitgestellt.

Das Zusatzgerät ist beispielsweise ein Smartphone, ein Tablet-Computer, eine Smartwatch oder ein Head-Mounted-Gerät, insbesondere eine Datenbrille. Unter letzterem wird eine auf der Nase und Ohren getragene Vorrichtung verstanden. Brillengläser, insbesondere geschliffene Gläser, sind nicht erforderlich, können allerdings vorgesehen sein.

Vorgesehen sein kann, dass das Hochdruckreinigungssystem eine Datenverarbeitungseinrichtung mit einer Steuereinheit umfasst, wobei die Datenverarbeitungseinrichtung ein Internetportal für den Benutzer zur Interaktion mit dem Hochdruckreinigungssystem bereitstellt, auf das über die Eingabeeinheit zugegriffen werden kann, wobei Ausgaben über die Ausgabeeinheit bereitstellbar sind. Insbesondere alternativ oder ergänzend zur Interaktion des Benutzers über das Benutzeranwendungsprogramm kann das Internetportal vorgesehen sein.

Es kann bei einer bevorzugten Ausführungsform vorgesehen sein, dass die Eingabeeinheit, die Ausgabeeinheit und/oder mindestens eine Steuereinheit am Hochdruckreinigungsgerät angeordnet oder von diesem umfasst sind. Insbesondere kann vorgesehen sein, dass die Benutzung eines externen Zusatzgerätes nicht erforderlich ist, um die Vorteile der Erfindung zu nutzen.

Bei einer bevorzugten Ausführungsform kann vorgesehen sein, dass die Eingabeeinheit und/oder die Ausgabeeinheit an einer Bedieneinheit für das Hochdruckreinigungsgerät angeordnet oder von diesem umfasst ist, die mit dem Hochdruckreinigungsgerät strömungsverbunden ist. Die Bedieneinheit ist vorteilhafterweise eine Hochdruckpistole für das Hochdruckreinigungsgerät.

Bei einer vorteilhaften Ausführungsform kann vorgesehen sein, dass das Zubehörteil eine Ausgabeeinheit umfasst. Beispielsweise ist die Ausgabeeinheit am Zubehörteil optisch ausgestaltet, und dem Benutzer wird eine Reinigungsempfehlung durch einen optischen Hinweis am Zubehörteil bereitgestellt, etwa über ein Leuchtelement. Der optische Hinweis zeigt dem Benutzer, dass die mindestens eine Steuereinheit das bestimmte Zubehörteil empfiehlt.

Wie bereits erwähnt, kann vorgesehen sein, dass mindestens eine Steuereinheit im Hochdruckreinigungsgerät angeordnet oder von diesem umfasst ist.

Mindestens eine Steuereinheit kann, wie erwähnt, Bestandteil der integrierten Einheit sein, insbesondere des Zusatzgerätes.

Als günstig kann es sich erweisen, wenn mindestens eine räumliche entfernt vom Hochdruckreinigungsgerät angeordnete Datenverarbeitungseinrichtung vorgesehen ist, die mindestens eine Steuereinheit umfasst. Die Datenverarbeitungseinrichtung ist beispielsweise im Besitz und/oder unter der Verwaltung eines Herstellers des Hochdruckreinigungssystems.

Die mindestens eine Datenverarbeitungseinrichtung ist bei einer bevorzugten Ausführungsform über ein Rechnernetzwerk und/oder einen Cloud-Dienst bereitgestellt. Insbesondere können mehrere räumlich entfernt voneinander und über ein Kommunikationsnetzwerk miteinander verbundene Datenverarbeitungseinrichtungen vorgesehen sein.

Es versteht sich, dass auch die vorstehend erwähnte Speichereinheit räumlich entfernt vom Hochdruckreinigungsgerät angeordnet sein kann und/oder über mindestens ein Rechnernetzwerk und/oder einen Cloud-Dienst bereitgestellt sein kann.

Wie bereits erwähnt, besteht die Möglichkeit einer kabellosen und/oder kabelgebundenen Kommunikation zwischen Komponenten des Hochdruckreinigungssystems. Die Kommunikation kann über zumindest eines der Folgenden erfolgen: WiFi, Bluetooth, ZigBee, mobile Datenverbindung, zum Beispiel über eine SIM-Karte und ein Mobilfunknetz.

Zwischen dem tragbaren Zusatzgerät und dem Hochdruckreinigungsgerät kann bei einer bevorzugten Ausführungsform eine Punkt-zu-Punkt-Kommunikation erfolgen, beispielsweise mittels Bluetooth.

Der mindestens eine Betriebsparameter kann vorteilhafterweise eines der Folgenden sein oder umfassen:
- Druck der Reinigungsflüssigkeit;
- Druckstufe des Pumpaggregates;
- Volumenstrom der Reinigungsflüssigkeit;
- Volumenstufe für Reinigungsflüssigkeit, wobei beispielsweise stufenweise die Menge vom Pumpaggregat geförderter Reinigungsflüssigkeit je Zeiteinheit eingestellt werden kann;
- Beimischverhältnis einer Reinigungschemikalie zur Reinigungsflüssigkeit;
- Arbeitsabstand des Zubehörteils vom zu reinigenden Gegenstand;
- Nutzung mindestens einer bestimmten Düse des Zubehörteils zum Abgeben der Reinigungsflüssigkeit;
- Nutzung eines Betriebsmodus mit vorübergehend erhöhtem Druck (Boost) für die Reinigungsflüssigkeit.

Vorgesehen sein kann, dass ein Betriebsmodus mit vorübergehend erhöhtem Druck (Boost-Modus) vorgesehen ist. Über die Eingabeeinheit kann der Benutzer vorteilhafterweise den Boost-Modus aktivieren oder deaktivieren. Vorgesehen sein kann, dass der Benutzer den Wert mindestens eines Betriebsparameters, der während des Boost-Modus eingenommen wird, einstellen kann.

Beispielsweise kann abhängig vom zu reinigenden Gegenstand und/oder vom verwendeten Zubehörteil ein Boost-Modus beschränkt oder gar unmöglich sein.

Denkbar ist, dass der Boost-Modus über die Eingabeeinheit, speziell das externe Zusatzgerät, aktiviert oder deaktiviert werden kann.

Günstigerweise ist vorgesehen, dass mindestens ein Betriebsparameter dem Hochdruckreinigungsgerät vom Benutzer über die Eingabeeinheit und/oder über eine Bedieneinheit des Hochdruckreinigungsgerätes, zum Beispiel in Gestalt einer Hochdruckpistole, vorgeben kann.

Vorgesehen sein kann, dass ein Wert für mindestens einen Betriebsparameter dem Hochdruckreinigungsgerät stufenweise oder stufenlos vorgebbar ist. Alternativ oder ergänzend kann vorgesehen sein, dass der Wert vom Hochdruckreinigungsgerät stufenweise oder stufenlos eingestellt werden kann.

Die Eingabeeinheit kann beispielsweise optisch, berührungssensitiv und/oder akustisch ausgestaltet sein. Eine optische Eingabeeinheit kann bei einer bevorzugten Ausführungsform mindestens eine Kamera und insbesondere Digitalkamera umfassen oder mit einer solchen in Wirkverbindung stehen.

Die Eingabeeinheit ist vorteilhafterweise berührungssensitiv ausgestaltet mit einem berührungssensitiven Eingabeelement, wobei der Gegenstand vom Benutzer insbesondere durch Betätigung einer Taste, eines Piktogrammes, einer Abbildung, durch Eingabe in ein Eingabefeld und/oder durch Auswahl aus einer Liste vorgebbar ist. Die berührungssensitive Eingabeeinheit ist oder umfasst zum Beispiel einen Touchscreen und kommt bevorzugt bei Nutzung einer App zum Einsatz. Die Taste kann zum Beispiel durch eine virtuelle Schaltfläche bereitgestellt werden. Alternativ oder ergänzend kann ein Piktogramm mit einer symbolartigen Darstellung des Gegenstandes oder eine Abbildung des Gegenstandes selbst vorgesehen sein. Ein Tippen im Eingabefeld und/oder Auswahl aus einer Liste vordefinierter Gegenstände ist ebenfalls denkbar.

Vorgesehen sein kann, dass die Eingabeeinheit akustisch ausgestaltet ist mit einem Mikrofon, wobei der Gegenstand vom Benutzer durch Spracheingabe vorgebbar und/oder das Auslösen des mindestens einen Interaktionselementes mittels Spracheingabe durchführbar ist. Beispielsweise kann der Benutzer sprachgesteuert mit dem Hochdruckreinigungssystem interagieren. Die Rückmeldung der mindestens einen Steuereinheit kann beispielsweise akustisch über einen Lautsprecher der Ausgabeeinheit erfolgen und/oder optisch an der Ausgabeeinheit.

Es kann bevorzugt eine integrierte Eingabe-/Ausgabeeinheit vorgesehen sein, die einen Touchscreen umfasst.

Von Vorteil ist es, wenn das Hochdruckreinigungssystem eine Erfassungseinheit zum Erfassen des Gegenstandes umfasst oder ausbildet und wenn eine diesbezügliche Information der Erfassungseinheit an die mindestens eine Steuereinheit übertragbar ist und die mindestens eine Steuereinheit ausgebildet ist, den Gegenstand und/oder eine Beschaffenheit desselben anhand der Informationen zu ermitteln. Das Hochdruckreinigungssystem erweist sich dadurch als benutzerfreundlich und vielseitig.

Günstig kann es sein, wenn das Zusatzgerät die Erfassungseinheit umfasst oder ausbildet. Eine gesonderte Erfassungseinheit kann dadurch eingespart werden.

Als günstig kann es sich erweisen, wenn die Erfassungseinheit eine Kamera zum Erstellen mindestens einer Aufnahme des Gegenstandes umfasst und diesbezügliche Bildinformationen an die mindestens eine Steuereinheit übertragbar sind, und wenn die Steuereinheit ausgebildet ist, den Gegenstand anhand der Bildinformationen zu übermitteln. Beispielsweise wird ein externes Zusatzgerät in Gestalt eines Smartphones, Tablet-Computers oder eines Head-Mounted-Devices genutzt. Die Aufnahme kann zum Beispiel spontan oder nur auf Auslösen durch den Benutzer erstellt werden. In der mindestens einen Steuereinheit können Bildverarbeitungsalgorithmen hinterlegt sein, die die Bildinformationen analysieren und feststellen, um was für eine Art zu reinigenden Gegenstand es sich handelt.

Vorgesehen sein kann, dass die Erfassungseinheit eine spektroskopische Einheit zur spektroskopischen Untersuchung des Gegenstandes ist. Diesbezügliche Informationen können von der mindestens einen Steuereinheit zur Ermittlung des Gegenstandes und/oder dessen Beschaffenheit ausgewertet werden.

Von Vorteil ist es, wenn der mindestens einen Steuereinheit eine Information über die Beschaffenheit des Gegenstandes bereitstellbar ist, oder wenn von der Steuereinheit anhand der an sie übertragenen Informationen die Beschaffenheit des Gegenstandes ermittelbar ist. Von Vorteil ist es dabei, wenn insbesondere ein Material des Gegenstandes und/oder ein Verschmutzungsgrad des Gegenstandes bereitgestellt oder ermittelt werden können. Die Reinigungsempfehlung ist vorteilhafterweise abhängig von der ermittelten Beschaffenheit bereitstellbar, um ein bestmögliches Reinigungsergebnis zu erzielen.

Günstig ist es, wenn das Hochdruckreinigungssystem eine Speichereinheit umfasst und wenn in der Speichereinheit ein Benutzerprofil des Benutzers speicherbar ist, wobei mit dem Benutzerprofil verknüpfte Informationen von der mindestens einen Steuereinheit für die Erstellung der Reinigungsempfehlung berücksichtigbar sind. Durch Nutzung des Benutzerprofils können dem System zusätzliche Informationen bereitgestellt werden, die für die Reinigungsempfehlung verwertet werden können, im Hinblick auf ein bestmögliches Reinigungsergebnis.

Die mit dem Benutzerprofil verknüpften Informationen können vorteilhafterweise der Reinigungsempfehlung und/oder dem Reinigungsprofil zugrunde gelegt werden.

Von Vorteil ist es, wenn über die Eingabeeinheit und die Ausgabeeinheit eine Schnittstelle für den Benutzer zur Interaktion mit dem Benutzerprofil bereitstellbar ist. Dies bietet dem Benutzer die Möglichkeit, das Benutzerprofil zu pflegen und vorteilhafterweise um zusätzliche Informationen zu ergänzen, die von der mindestens einen Steuereinheit berücksichtigt werden können. Günstig ist es, wenn die Schnittstelle unter Nutzung eines Benutzeranwendungsprogramms (vorteilhafterweise die vorstehend genannte App) eines Zusatzgerätes bereitgestellt werden kann, wobei das Zusatzgerät die Eingabeeinheit und die Ausgabeeinheit umfasst.

Günstig ist es, wenn mit dem Benutzerprofil mindestens ein individualisierter zu reinigender Gegenstand verknüpft in der Speichereinheit speicherbar ist, der der mindestens einen Steuereinheit vom Benutzer vorgebbar ist, und wenn die Reinigungsempfehlung für den individualisierten Gegenstand bereitstellbar ist. Auf diese Weise weist das Hochdruckreinigungssystem eine hohe Vielseitigkeit auf. Der Benutzer kann in seinem Benutzerprofil individuelle Gegenstände speichern und dadurch Empfehlungen verfeinern, die ansonsten nur über generische, gleichartige Gegenstände bereitgestellt werden können. Vorzugsweise können dabei die Vorlieben des Benutzers für die Reinigung des Gegenstandes berücksichtigt werden, insbesondere auch die Beschaffenheit des individuellen Gegenstandes.

Mit dem Benutzerprofil ist bei einer bevorzugten Ausführungsform mindestens ein Zubehörteil verknüpft und eine diesbezügliche Information in der Speichereinheit speicherbar, wobei die Reinigungsempfehlung an den Benutzer nur auf Basis des hinterlegten mindestens einen Zubehörteils bereitstellbar ist. Die Reinigungsempfehlung kann auf diese Weise an den Benutzer angepasst werden. Dabei werden nur Zubehörteile zugrunde gelegt, die der Benutzer auch besitzt. Die Liste von Zubehörteilen kann beispielsweise automatisch mittels einer Sensoreinrichtung, kontaktlos mittels Chipkarten und/oder manuell durch Scannen eines Codes oder durch Eingabe eines Codes erfolgen. Die Liste von Zubehörteilen kann auf diese Weise zum Beispiel vom Benutzer gewartet und seinem Benutzerprofil hinzugefügt werden.

Alternativ kann vorgesehen sein, dass mit dem Benutzerprofil mindestens ein Zubehörteil verknüpft ist und eine diesbezügliche Information in der Speichereinheit speicherbar ist, wobei die Reinigungsempfehlung an den Benutzer unabhängig vom mindestens einen Zubehörteil bereitstellbar ist. Ungeachtet dessen, dass der Benutzer ein bestimmtes Zubehörteil nicht besitzt, kann die Reinigungsempfehlung die Nutzung dieses Zubehörteils vorschlagen. Dabei kann vorteilhafterweise ein Interaktionselement verbunden mit einem Erwerbswunsch für das Zubehörteil bereitgestellt werden.

Vorgesehen ist vorteilhafterweise, dass mit dem Benutzerprofil der Typ des Hochdruckreinigungsgerätes verknüpft in der Speichereinheit speicherbar ist, und wenn, die Reinigungsempfehlung abhängig vom Typ des Hochdruckreinigungsgerätes bereitstellbar ist. Dies bietet den Vorteil, dass die Reinigungsempfehlung auf den Typ des vom Benutzer eingesetzten Hochdruckreinigungsgerätes maßgeschneidert werden kann. Der Erfindung bleibt es selbstverständlich vorbehalten, dass mehrere Hochdruckreinigungsgeräte mit dem Benutzerprofil verknüpft sein können, wobei zum Beispiel der Benutzer das Hochdruckreinigungsgerät vorgeben kann oder dieses automatisch erkennbar ist. Die angepasste Reinigungsempfehlung ermöglicht beispielsweise, dass nur mit dem Hochdruckreinigungsgerät kompatible Zubehörteile und/oder Werte von Betriebsparametern vorgegeben werden.

Vorgesehen sein kann, dass die Ausgabeeinheit optisch ausgestaltet ist und insbesondere eine Bildanzeige zum Anzeigen der Reinigungsempfehlung und/oder des mindestens einen Interaktionselementes umfasst. Hierauf wurde vorstehend bereits eingegangen.

Die Ausgabeeinheit kann alternativ oder ergänzend akustisch ausgestaltet sein mit einem Lautsprecher zur Sprachausgabe der Reinigungsempfehlung und Ausgabe des mindestens einen Interaktionselementes für den sprachlichen Dialogbetrieb. Auf die Sprachausgabe kann der Benutzer zum Beispiel durch Spracheingabe mit dem Hochdruckreinigungssystem interagieren.

Die Reinigungsempfehlung kann an eine Steuereinheit des Hochdruckreinigungsgerätes übertragbar sein, oder das Hochdruckreinigungsgerät kann mindestens eine Steuereinheit umfassen. Hierauf wurde bereits eingegangen.

Vorgesehen sein kann, dass der Wert mindestens eines Betriebsparameters vom Hochdruckreinigungsgerät beschränkbar ist, abhängig von dem in der Reinigungsempfehlung enthaltenen Zubehörteil. Beispielsweise wird der Druck der Reinigungsflüssigkeit oder eine Druckstufe für die Reinigungsflüssigkeit beschränkt, abhängig vom Zubehörteil und/oder dem zu reinigenden Gegenstand, um eine Beschädigung des Gegenstandes zu vermeiden.

Günstig ist es, wenn von einer Steuereinheit des Hochdruckreinigungsgerätes bei dessen Benutzung feststellbar ist, welcher Wert mindestens eines Betriebsparameters genutzt wird und/oder welches Zubehörteil verwendet wird. Insbesondere ist der Wert mindestens eines Betriebsparameters vom Hochdruckreinigungsgerät beschränkbar, abhängig vom verwendeten Zubehörteil, welches vorzugsweise berührungslos erfassbar ist, zum Beispiel mittels einer RFID-Technologie.

Günstig ist es, wenn von der Steuereinheit des Hochdruckreinigungsgerätes feststellbar ist, ob der Wert mindestens eines Betriebsparameters und/oder das genutzte Zubehörteil von der Reinigungsempfehlung abweicht, zum Beispiel bei der Betriebsaufnahme oder zu einem späteren Zeitpunkt. Dies gibt insbesondere die Möglichkeit, eine Fehlbedienung des Hochdruckreinigungsgerätes abzufangen und erforderlichenfalls Gegenmaßnahmen einzuleiten.

Bei einer Feststellung der Abweichung ist beispielsweise mindestens eines der Folgenden durchführbar:
- Bereitstellen eines Hinweises an den Benutzer, insbesondere am Hochdruckreinigungsgerät, dessen Bedieneinheit und/oder an der Ausgabeeinheit, zum Beispiel am externen Zusatzgerät;
- Deaktivieren des Hochdruckreinigungsgerätes oder des Pumpaggregates;
- Verändern des Wertes des mindestens einen Betriebsparameters am Hochdruckreinigungsgerät, vorzugsweise Einstellen des Wertes des Betriebsparameters gemäß der Reinigungsempfehlung;
- Verringern des Wertes des mindestens einen Betriebsparameters am Hochdruckreinigungsgerät, sofern der Wert des Betriebsparameters den Wert gemäß der Reinigungsempfehlung übersteigt, zum Beispiel zur Übereinstimmung mit einem maximalen vorgegebenen Wert;
- Übermitteln einer Information betreffend die Abweichung von der Reinigungsempfehlung an eine Speichereinheit und Speicherung der Information in der Speichereinheit. Beispielsweise können auf diese Weise etwaige Fehlbedienungen extern überprüft werden. Es besteht insbesondere die Möglichkeit, den Benutzer bei der Verwendung des Hochdruckreinigungssystems zu schulen. Denkbar ist auch der Ausschluss von Gewährleistungsansprüchen im Fall einer unsachgemäßen Benutzung.

Es versteht sich, dass die Komponenten des Hochdruckreinigungssystems erforderliche Kommunikationsschnittstellen zur Übertragung von Informationen untereinander und mit externen Geräten aufweisen können.

Vorgesehen sein kann, dass das Hochdruckreinigungsgerät mit weiteren Geräten des Benutzers insbesondere kabellos kommuniziert, speziell weiteren Reinigungsgeräten.

Das Hochdruckreinigungssystem umfasst vorteilhafterweise eine Speichereinheit, wobei Nutzungsinformationen des Hochdruckreinigungsgerätes von einer Steuereinheit zur Speicherung an die Speichereinheit übermittelbar und darin speicherbar sind. Beispielsweise kann ein Protokoll über die Nutzung des Hochdruckreinigungsgerätes erstellt werden.

Denkbar ist die Verwendung von Nutzungsinformationen, um den Verbrauch von Nutzungskomponenten zu erfassen, zum Beispiel den Verbrauch von Reinigungsmitteln und/oder die Abnutzung von Zubehörteilen. In diesem Fall können dem Benutzer zum Beispiel Nachbestellungen vorgeschlagen werden oder automatisch ausgelöst werden. Die Nutzungsinformationen können zum Beispiel von der mindestens einen Steuereinheit oder einer räumlich entfernten Datenverarbeitungseinrichtung analysiert und diesbezügliche Empfehlungen zur Verbesserung des Reinigungsverhaltens an den Benutzer übermittelt werden.

Günstig kann es sein, wenn zwischen dem Hochdruckreinigungsgerät und einer externen Datenverarbeitungseinrichtung, beispielsweise bereitgestellt über einen Cloud-Dienst, Informationen übertragen werden können. Das Hochdruckreinigungsgerät kann zum Beispiel Zubehör- und Geräteinformationen an die Datenverarbeitungseinrichtung übermitteln. Befehle oder Einstellungen, die zum Beispiel vom Benutzer an der Eingabeeinheit vorgenommen werden, können von dieser an die externe Datenverarbeitungseinrichtung und von dort zum Beispiel direkt an das Hochdruckreinigungsgerät übermittelt werden.

Denkbar ist, dass das Hochdruckreinigungsgerät über ein Rechnernetzwerk, zum Beispiel eine Cloud, mit anderen Geräten kommunizieren kann. Alternativ oder ergänzend kann vorgesehen sein, dass eine direkte Punkt-zu-Punkt-Kommunikationsverbindung zwischen zwei oder mehr Geräten besteht. Sämtliche Kommunikationsverbindungen zwischen Komponenten des Hochdruckreinigungssystems und/oder mit externen Geräten können unidirektional oder vorzugsweise bidirektional ausgestaltet sein.

Das Hochdruckreinigungssystem kann ein Gateway umfassen, mit welchem das Hochdruckreinigungsgerät kommunizieren kann, beispielsweise per Wi-Fi, per Bluetooth und/oder per ZigBee-Verbindung. Weitere Geräte, insbesondere des Benutzers selbst, können in das zwischen dem Gateway und dem Hochdruckreinigungsgerät bestehenden Netzwerk eingebunden sein. Alternativ kann vorgesehen sein, dass weitere Geräte in ein andersartiges Netzwerk eingebunden sind und über das Gateway mit dem Hochdruckreinigungsgerät kommunizieren.

Als günstig kann es sich erweisen, wenn vom Benutzer über die Eingabeeinheit Funktionen des Hochdruckreinigungsgerätes veränderbar und insbesondere freischaltbar sind. Beispielsweise kann über die Eingabeeinheit, speziell das Benutzeranwendungsprogramm, eine Funktion des Hochdruckreinigungsgerätes aktivierbar sein. Vorgesehen sein kann zum Beispiel, dass die Freischaltung oder Aktivierung erst nach Verbindungsaufbau der Eingabeeinheit mit einer Datenverarbeitungseinrichtung im Besitz oder unter Verwaltung des Herstellers des Hochdruckreinigungssystems erfolgt und an eine vorherige Registrierung beim Hersteller und/oder die Entrichtung einer Gebühr gekoppelt ist. Denkbar ist insbesondere auch, dass eine Funktion des Hochdruckreinigungsgerätes freizuschalten oder zu aktivieren ist, um ein bestimmtes Zubehörteil bestmöglich zu verwenden.

Vorgesehen sein kann, dass ein im Hochdruckreiniger gespeichertes Grundprogramm (Firmware) aktualisierbar ist. Beispielsweise kann die Aktualisierung vom Benutzer über die Eingabeeinheit auslösbar sein.

Vorgesehen sein kann, dass am Hochdruckreinigungsgerät neue Software installierbar sind. Beispielsweise kann der Benutzer über die Eingabeeinheit die Installation neuer Software auslösen.

Vorgesehen sein kann, dass erfasst und gespeichert wird, welche Nutzungszeit (Dauer und/oder Zeiträume) für das Hochdruckreinigungsgerät besteht, welche Zubehörteile eingesetzt werden und/oder welche Gegenstände gereinigt werden.

Optional kann bei einem Hochdruckreinigungssystem der eingangs genannten Art zumindest eines der Folgenden vorgesehen sein:
- Die Reinigungsempfehlung umfasst vorteilhafterweise einen Hinweis zur Verwendung eines Zubehörteils und/oder den Wert mindestens eines Betriebsparameters, und das Hochdruckreinigungsgerät ist auf den Wert des mindestens einen Betriebsparameters einstellbar, ohne vorherige Bestätigung oder Änderung durch den Benutzer.
- Die Reinigungsempfehlung umfasst vorteilhafterweise einen Hinweis zur Verwendung eines Zubehörteils und/oder den Wert mindestens eines Betriebsparameters, und das Hochdruckreinigungssystem umfasst eine Speichereinheit, in der ein Benutzerprofil des Benutzers speicherbar ist, wobei mit dem Benutzerprofil verknüpfte Informationen von der mindestens einen Steuereinheit für die Erstellung der Reinigungsempfehlung berücksichtigbar sind, wobei mit dem Benutzerprofil mindestens ein Zubehörteil und/oder der Typ des Hochdruckreinigungsgerätes verknüpft ist und eine diesbezügliche Information in der Speichereinheit speicherbar ist und die Reinigungsempfehlung an den Benutzer auf Basis des hinterlegten mindestens einen Zubehörteils und/oder des Hochdruckreinigungsgerätes bereitstellbar ist. Hierbei kann vorgesehen sein, dass die Reinigungsempfehlung nur auf Basis des hinterlegten mindestens einen Zubehörteils bereitstellbar ist.
- Die Reinigungsempfehlung umfasst vorteilhafterweise einen Hinweis zur Verwendung eines Zubehörteils und/oder den Wert mindestens eines Betriebsparameters, und der zu reinigende Gegenstand wird mittels einer Erfassungseinheit erfasst und eine diesbezügliche Information an die mindestens eine Steuereinheit übertragen, wobei die Steuereinheit ausgebildet ist, den Gegenstand anhand der ihr übermittelten Information zu ermitteln. Abhängig vom Ergebnis der Feststellung durch die mindestens eine Steuereinheit kann die Reinigungsempfehlung bereitgestellt werden. Die Erfassungseinheit ist oder umfasst zum Beispiel die vorstehend genannte Kamera zum Erstellen mindestens einer Aufnahme des Gegenstandes des Hochdruckreinigungssystems. Alternativ oder ergänzend kann zum Beispiel eine andersartige Erkennung des Gegenstandes denkbar sein, beispielsweise mittels RFID-Technologie, die Nutzung eines Codes oder dergleichen.

Die vorstehend beschriebenen, als optional hervorgehobenen Merkmale können in Kombination mit einem Hochdruckreinigungssystem der eingangs genannten Art eine eigenständige Erfindung im Rahmen der vorliegenden Offenbarung darstellen. Vorteilhafte Ausführungsformen dieser jeweiligen Erfindung können sich auf der Grundlage aller Merkmale der vorliegenden Offenbarung ergeben. Zu diesen Merkmalen können insbesondere auch diejenigen Merkmale gehören, die sich auf Bereitstellen des mindestens einen Interaktionselementes beziehen, vorzugsweise abhängig von der Reinigungsempfehlung.

An der Ausgabeeinheit können Bildinhalte von der mindestens einen Steuereinheit über augmentierte Realität (AR, Augmented Reality) darstellbar sein. Beispielsweise werden Aufnahmen des Gegenstandes um AR-Inhalte ergänzt, die den Benutzer bei der Einstellung des Hochdruckreinigungsgerätes und/oder bei der Durchführung der Reinigung unterstützen können.

Die eingangs genannte Aufgabe wird durch ein erfindungsgemäßes Verfahren zum Betreiben eines Hochdruckreinigungssystems gelöst, umfassend ein Hochdruckreinigungsgerät, das ein Pumpaggregat aufweist, mindestens ein Zubehörteil, das in Strömungsverbindung mit einem Hochdruckausgang des Pumpaggregates steht oder bringbar ist, wobei das Hochdruckreinigungsgerät mit mindestens einem veränderbaren Betriebsparameter betreibbar ist, wobei ein Benutzer einer Steuereinheit über eine Eingabeeinheit einen zu reinigenden Gegenstand vorgibt und die Steuereinheit abhängig von der Vorgabe an einer Ausgabeeinheit eine Reinigungsempfehlung bereitstellt, umfassend einen Hinweis zur Verwendung eines Zubehörteils und/oder den Wert mindestens eines Betriebsparameters, wobei an der Ausgabeeinheit mit der Reinigungsempfehlung verknüpft mindestens ein Interaktionselement für den Benutzer bereitgestellt wird, zum Übermitteln von Interaktionsinformationen an die mindestens eine Steuereinheit, abhängig von der Reinigungsempfehlung.

Die Vorteile, die bereits im Zusammenhang mit der Erläuterung des erfindungsgemäßen Hochdruckreinigungssystems erwähnt wurden, können unter Einsatz des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen des erfindungsgemäßen Hochdruckreinigungssystems. Auch diesbezüglich kann auf die voranstehenden Ausführungen verwiesen werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung eines erfindungsgemäßen Hochdruckreinigungssystems, umfassend ein Hochdruckreinigungsgerät, ein externes Zusatzgerät und eine Mehrzahl von Zubehörteilen;
- Figur 2:: eine Darstellung eines weiteren Zubehörteils des Hochdruckreinigungssystems aus Figur 1;
- Figur 3:: eine schematische Darstellung des Zusatzgerätes aus Figur 1;
- Figuren 4 bis 6:: andersartige Zusatzgeräte, die alternativ oder ergänzend zu dem in Figur 1 dargestellten Zusatzgerät beim Hochdruckreinigungssystem zum Einsatz kommen können;
- Figur 7:: eine schematische Darstellung einer Eingabeeinheit des Zusatzgerätes;
- Figur 8:: eine schematische Darstellung einer Ausgabeeinheit des Zusatzgerätes, an der Reinigungsempfehlungen dargestellt werden;
- Figur 9:: eine Darstellung entsprechend Figur 8 mit andersartigen Reinigungsempfehlungen;
- Figur 10:: eine weitere bevorzugte Ausführungsform, ähnlich Figur 1, des erfindungsgemäßen Hochdruckreinigungssystems;
- Figur 11:: eine weitere schematische Darstellung Hochdruckreinigungssystems aus Figur 1;
- Figur 12:: schematisch die Darstellung eines Zusatzgerätes und eines Hochdruckreinigungsgerätes bei einer weiteren bevorzugten Ausführungsform des erfindungsgemäßen Hochdruckreinigungssystems;
- Figuren 13 bis 15:: schematisch die Darstellung einer Ausgabeeinheit des Zusatzgerätes zur Auswahl des zu reinigenden Gegenstandes, der Reinigungsempfehlung und während des Betriebs des Hochdruckreinigungssystems; und
- Figuren 16 bis 28:: schematisch die Darstellung einer Ausgabeeinheit des Zusatzgerätes mit der Auswahl des zu reinigenden Gegenstandes, der Reinigungsempfehlung und einschließlich der Ausgabe von Reinigungshinweisen in einer Schritt-für-Schritt-Anleitung für den Benutzer.

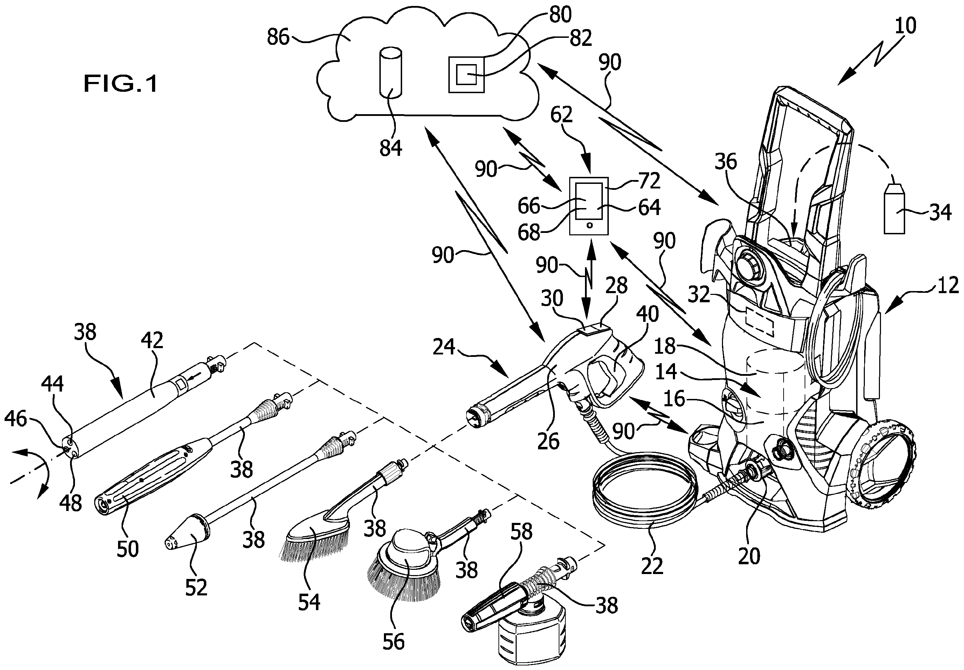

Nachfolgend werden unter Verweis auf die Zeichnung vorteilhafte Ausführungsformen des erfindungsgemäßen Hochdruckreinigungssystems beschrieben, mit denen jeweils vorteilhafte Ausführungsbeispiele des erfindungsgemäßen Verfahrens durchgeführt werden können. Für gleiche oder gleichwirkende Merkmale oder Bauteile werden identische Bezugszeichen benutzt. Zunächst wird dabei auf ein Hochdruckreinigungssystem eingegangen, das in den Figuren 1 bis 9 sowie 11 dargestellt ist.

Die Vorteile, die im Zusammenhang mit dieser Ausführungsform erläutert werden, können bei den weiteren Ausführungsformen ebenfalls erzielt werden, so dass auf die die erste Ausführungsform betreffende Beschreibung verwiesen werden kann. Nachfolgend wird lediglich auf die wesentlichen Unterschiede der verschiedenartigen vorteilhaften Ausführungsformen eingegangen.

Figur 1 zeigt schematisch ein mit dem Bezugszeichen 10 belegtes Hochdruckreinigungssystem in einer bevorzugten Ausführungsform. Das Hochdruckreinigungssystem 10 umfasst ein Hochdruckreinigungsgerät 12 mit einem Pumpaggregat 14, das eine Hochdruckpumpe 16 und einen Antriebsmotor 18 für die Hochdruckpumpe 16 umfasst.

An einen Hochdruckausgang 20 der Hochdruckpumpe 16 kann eine Hochdruckleitung, zum Beispiel in Gestalt einer Schlauchleitung 22 angeschlossen werden. Die Schlauchleitung 22 ist ferner an eine Bedieneinheit 24 in Gestalt einer Hochdruckpistole 26 angeschlossen.

An der Bedieneinheit 24 ist eine Eingabeeinheit 28 angeordnet. Ferner kann eine Ausgabeeinheit 30 an der Bedieneinheit 24 angeordnet sein. Über die Eingabeeinheit 28 kann ein Benutzer zum Beispiel mindestens einen Betriebsparameter des Hochdruckreinigungsgerätes 12 einstellen. Der Betriebsparameter ist zum Beispiel eine Druckstufe, mit der das Pumpaggregat 14 betrieben wird, wobei der Druck der abgegebenen Reinigungsflüssigkeit von der Druckstufe abhängt.

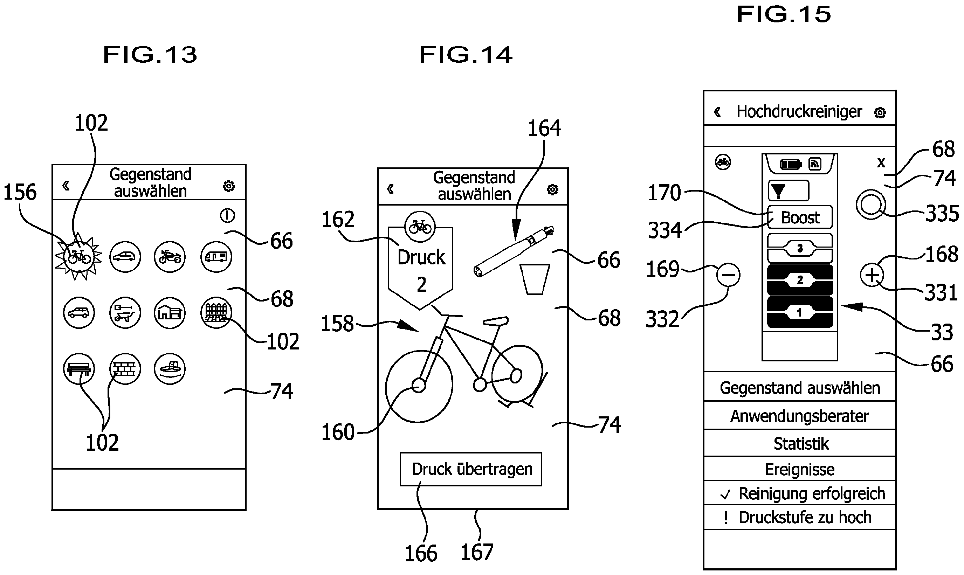

Die Figur 15, auf die nachfolgend noch eingegangen wird, zeigt schematisch die Duplizierung eines Bildinhaltes der Ausgabeeinheit 30 an der Anzeigeeinheit eines externen Zusatzgerätes. Der dort mit dem Bezugszeichen 31 belegte Bildinhalt umfasst die Anzeige der im Betrieb aktuell verwendeten Druckstufe, im vorliegenden Beispiel der Druckstufe "2".

Mittels virtueller Tasten, vorliegend ausgebildet als Schaltflächen 331, 332, kann der Druck im Betrieb des Hochdruckreinigungsgerätes 12 verändert werden, indem die Druckstufe inkrementiert wird oder dekrementiert wird. Eine virtuelle Taste in Gestalt einer Schaltfläche 334 erlaubt es, das Hochdruckreinigungsgerät 12 kurzzeitig mit erhöhtem Druck in einem "Boost"-Betriebsmodus zu betreiben. Ein Anzeigeelement 335 visualisiert dem Benutzer in diesem Fall vorzugsweise, wie lange der "Boost"-Modus bereits aktiviert ist oder noch aktiviert ist. Beispielsweise kann eine Aktivierung des "Boost"-Modus für ungefähr 10 bis 60 Sekunden vorgesehen sein.

Im vorliegenden Fall versteht es sich, dass der Bildinhalt 33 an der Ausgabeeinheit 30 angezeigt werden kann. Die Hochdruckpistole 26 kann den Schaltflächen 331, 332 und 334 entsprechende Betätigungselemente, zum Beispiel in Gestalt physischer Tasten, umfassen. An der Ausgabeeinheit 30 kann ein dem Anzeigeelement 335 entsprechendes Anzeigeelement vorgesehen sein.

Alternativ oder ergänzend zur Druckstufe kann als Betriebsparameter beispielsweise das Beimischverhältnis einer Reinigungschemikalie zur Reinigungsflüssigkeit sein, wobei der Benutzer das Beimischverhältnis über die Eingabeeinheit 28 vorgeben kann. Anweisungen des Benutzers an der Bedieneinheit 24 werden zum Beispiel an eine im Hochdruckreinigungsgerät 12 angeordnete Steuereinheit 32 übermittelt, insbesondere kabellos. Die Steuereinheit 32 kann das Pumpaggregat 14 zur Einnahme der Druckstufe ansteuern.

Zum Beimischen der Reinigungschemikalie kann ein schematisch dargestellter Behälter 34 in eine Aufnahme 36 des Hochdruckreinigungsgerätes 12 eingesetzt werden. Je nach Beimischverhältnis kann die Steuereinheit 32 das Pumpaggregat 14 zur Beimischung der gewünschten Menge an Reinigungschemikalie ansteuern.

An der Ausgabeeinheit 30 können Rückmeldungen des Hochdruckreinigungsgerätes 12 und/oder Informationen über die Eingaben des Benutzers dargestellt werden.

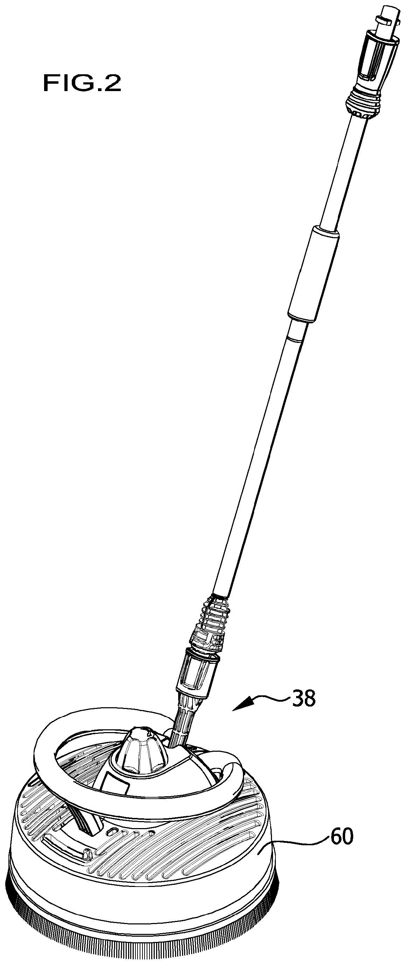

Das Hochdruckreinigungssystem umfasst eine Mehrzahl von Zubehörteilen, die in Figur 1 und in Figur 2 dargestellt und jeweils mit dem Bezugszeichen 38 belegt sind. Je nach Reinigungsaufgabe und/oder Wunsch des Benutzers kann ein Zubehörteil 38 lösbar mit der Bedieneinheit 24 verbunden werden. Die Reinigungsflüssigkeit, insbesondere Wasser, gegebenenfalls mit beigemischter Reinigungschemikalie, wird bei über eine Handhabe 40 betätigter Bedieneinheit 24 vom jeweiligen Zubehörteil 38 abgegeben. Es besteht jeweils eine Strömungsverbindung vom Zubehörteil 38 zum Hochdruckausgang 20.

Die Zeichnung stellt beispielhaft folgende Zubehörteile 38 dar:
Mit dem Bezugszeichen 42 ist eine Austragsvorrichtung 42 bezeichnet, die vorliegend drei Austragseinheiten 44, 46 und 48 umfasst. Je nach Betriebsstellung der Austragsvorrichtung 42 kann eine der Austragseinheiten 44, 46 oder 48 eingesetzt werden.

Die Austragseinheit 44 umfasst beispielsweise eine Flachstrahldüse, die Austragseinheit 46 eine Rotordüse und die Austragseinheit 48 eine Niederdruck-Reinigungsmitteldüse.

Mit dem Bezugszeichen 50 ist eine Austragseinheit mit einer Flachstrahldüse gekennzeichnet.

Das Bezugszeichen 52 kennzeichnet eine Austragseinheit mit einer Rotordüse.

Die Bezugszeichen 54 und 56 kennzeichnen Zubehörteile 38 in Gestalt von Waschbürsten.

Das Bezugszeichen 58 kennzeichnet ein Zubehörteil 38 in Gestalt einer Schaumdüse.

Das Bezugszeichen 60 kennzeichnet ein Zubehörteil 38 in Gestalt eines Flächenreinigungsgerätes (Figur 2).

Je nach Reinigungsaufgabe, d. h. insbesondere zu reinigendem Gegenstand, ist der Einsatz mindestens eines geeigneten Zubehörteils 38 von Vorteil. Dabei ist zum einen ein möglichst gutes Reinigungsergebnis wünschenswert. Zum anderen soll eine Beschädigung des Gegenstandes jedoch vermieden werden.

Zu diesem Zweck ist es von Vorteil, wenn der Benutzer mindestens ein geeignetes Zubehörteil 38 einsetzt, insbesondere in Kombination mit einem zum Betrieb dieses Zubehörteils 38 und zur Erzielung eines guten Reinigungsergebnisses geeigneten Betriebsparameters des Hochdruckreinigungsgerätes 12.

Mögliche Betriebsparameter, die beim Hochdruckreinigungsgerät 12 eingestellt werden können, sind beispielsweise wie bereits erwähnt die Druckstufe des Pumpaggregates 14 oder das Beimischverhältnis für die Reinigungschemikalie. Weitere mögliche Betriebsparameter sind zum Beispiel der Druck (Absolutdruck) der Reinigungsflüssigkeit, ein Volumenstrom der Reinigungsflüssigkeit oder eine Volumenstufe für die Reinigungsflüssigkeit, ein Arbeitsabstand des Zubehörteils 38 vom zu reinigenden Gegenstand, die Nutzung einer bestimmten Düse, zum Beispiel bei der Austragsvorrichtung 42, und/oder die Nutzung eines Betriebsmodus mit vorübergehend erhöhtem Druck (Boost) für die Reinigungsflüssigkeit.

Betriebsparameter des Hochdruckreinigungsgerätes 12 können von dessen Steuereinheit 32 eingestellt werden. Dabei besteht insbesondere die Möglichkeit, dass dem Hochdruckreinigungsgerät 12 über eine Kommunikationsschnittstelle Informationen betreffend die Betriebsparameter, insbesondere Werte der Betriebsparameter, übermittelt werden. Dies wurde bereits vorstehend am Beispiel der Bedieneinheit 24 erläutert.

Die Informationsübertragung an das Hochdruckreinigungsgerät 12 erfolgt vorzugsweise kabellos. Hierbei können dem Fachmann geläufige unterschiedlichste Arten von Protokollen und Netzwerkarchitekturen verwendet werden.

Das Hochdruckreinigungssystem 10 umfasst ein externes, räumlich getrennt vom Hochdruckreinigungsgerät 12 angeordnetes Zusatzgerät 62. Im vorliegenden Beispiel umfasst das Zusatzgerät 62 eine integrierte Einheit 64, die eine Eingabeeinheit 66 für den Benutzer sowie eine Ausgabeeinheit 68 für den Benutzer umfasst. Die integrierte Einheit 64 umfasst die Eingabeeinheit 66 und die Ausgabeeinheit 68 in einem gemeinsamen Gehäuse 70. Das Zusatzgerät 62 ist im vorliegenden Beispiel als Smartphone 72 ausgestaltet.

Eine integrierte Eingabe-/Ausgabeeinheit in Gestalt eines Touchscreens 74 ist vorgesehen. Dementsprechend ist die Ausgabeeinheit 68 optisch ausgestaltet mit einer Bildanzeige zum Bereitstellen visueller Informationen für den Benutzer. Die Eingabeeinheit 66 ist berührungssensitiv ausgestaltet.

Es versteht sich, dass die Eingabeeinheit 66 alternativ oder ergänzend optisch und/oder akustisch, zum Beispiel für eine Spracheingabe, ausgestaltet sein kann und die Ausgabeeinheit 68 alternativ oder ergänzend akustisch, mit der Möglichkeit der Sprachausgabe.

Das Zusatzgerät 62 umfasst eine Steuereinheit 76 und eine Speichereinheit 78. In der Speichereinheit 78 ist ein Benutzeranwendungsprogramm, ausgebildet als App, gespeichert. Das Benutzeranwendungsprogramm kann von der Steuereinheit 76 ausgeführt werden und erlaubt dem Benutzer die Interaktion mit dem Hochdruckreinigungssystem 10 in intuitiver Weise. Insbesondere können Reinigungsempfehlungen auf Basis des zu reinigenden Gegenstandes vom Hochdruckreinigungssystem 10 angefordert werden und das Hochdruckreinigungsgerät 12 über das Zusatzgerät 62 für den Betrieb automatisch und/oder manuell eingestellt werden.

Der Austausch von Informationen zwischen dem Zusatzgerät 62 und dem Hochdruckreinigungsgerät 12 erfolgt bei einer bevorzugten Ausführungsform über eine Punkt-zu-Punkt-Verbindung, zum Beispiel mittels Bluetooth. Bei einer andersartigen vorteilhaften Ausführungsform kann vorgesehen sein, dass das Hochdruckreinigungsgerät 12 und das Zusatzgerät 62 in einem gemeinsamen Netzwerk kommunizieren. Beispielsweise kommt ein ZigBee-Netzwerk zum Einsatz, das von einem in der Zeichnung nicht dargestellten Gateway bereitgestellt wird und seinerseits über ein WLAN-Netzwerk mit einem Heimnetz-Router, der wiederum eine Internetverbindung ermöglicht, kommunizieren kann.

Das Hochdruckreinigungssystem 10 umfasst bei einer bevorzugten Ausführungsform ferner eine räumlich vom Hochdruckreinigungsgerät 12 und vom Zusatzgerät 62 angeordnete Datenverarbeitungseinrichtung 80, die ihrerseits eine Steuereinheit 82 aufweisen kann. Ferner kann eine Speichereinheit 84 räumlich entfernt angeordnet sein. Es versteht sich, dass die Speichereinheit 84 von der Datenverarbeitungseinrichtung 80, insbesondere der Steuereinheit 82, gebildet oder in diese integriert sein kann. Entsprechendes gilt für die Speichereinheit 78 und die Steuereinheit 76.

Im vorliegenden Beispiel werden die Datenverarbeitungseinrichtung 80 und die Speichereinheit 84 durch einen symbolisch dargestellten Cloud-Dienst 86 umgesetzt. Hierbei kann es sich insbesondere um mehrere, in Kommunikationsverbindung miteinander stehende Datenverarbeitungseinrichtungen handeln.

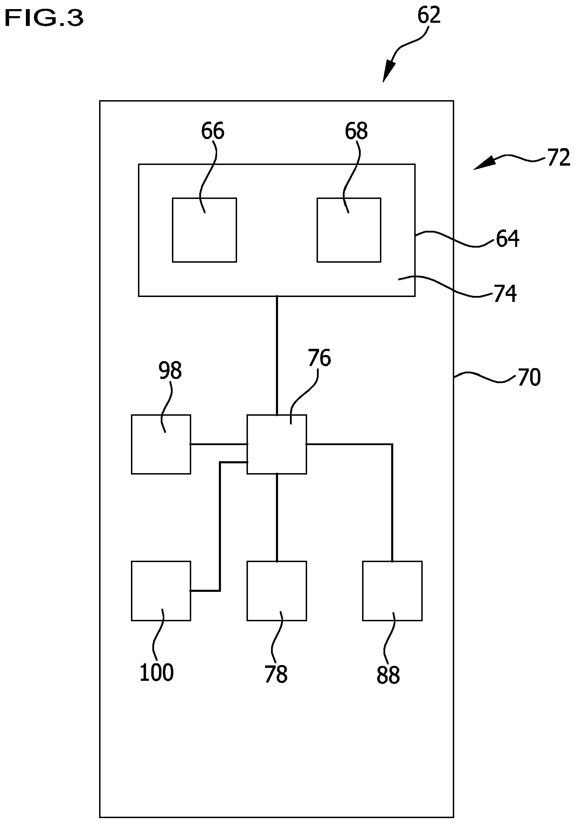

Die Datenverarbeitungseinrichtung 80 kann in Kommunikationsverbindung mit dem Zusatzgerät 62 stehen oder treten. Figur 3 kennzeichnet mit dem Bezugszeichen 88 beispielhaft ein Kommunikationsglied des Zusatzgerätes 62 zum Bereitstellen einer Kommunikationsschnittstelle.

Doppelpfeile 90 in Figur 1 kennzeichnen schematisch Kommunikationsverbindungen zwischen den verschiedenen Komponenten des Hochdruckreinigungssystems 10, nämlich dem Hochdruckreinigungsgerät 12, der Bedieneinheit 24, dem Zusatzgerät 62 und der Datenverarbeitungseinrichtung 80 bzw. dem Cloud-Dienst 86. Dabei erfolgt ein Datenaustausch vorzugsweise kabellos und/oder bidirektional. Sämtliche dem Fachmann geläufige Protokolle und/oder Netzwerke können zum Einsatz kommen. Der Einsatz von Punkt-zu-Punkt-Verbindungen ist denkbar.

Das Hochdruckreinigungssystem 10 kann alternativ oder ergänzend zum Zusatzgerät 62 weitere und/oder andersartige Zusatzgeräte umfassen. Denkbar ist zum einen, dass mehrere Zusatzgeräte 62 gleicher Art eingesetzt werden, beispielsweise unterschiedliche Smartphones 72.

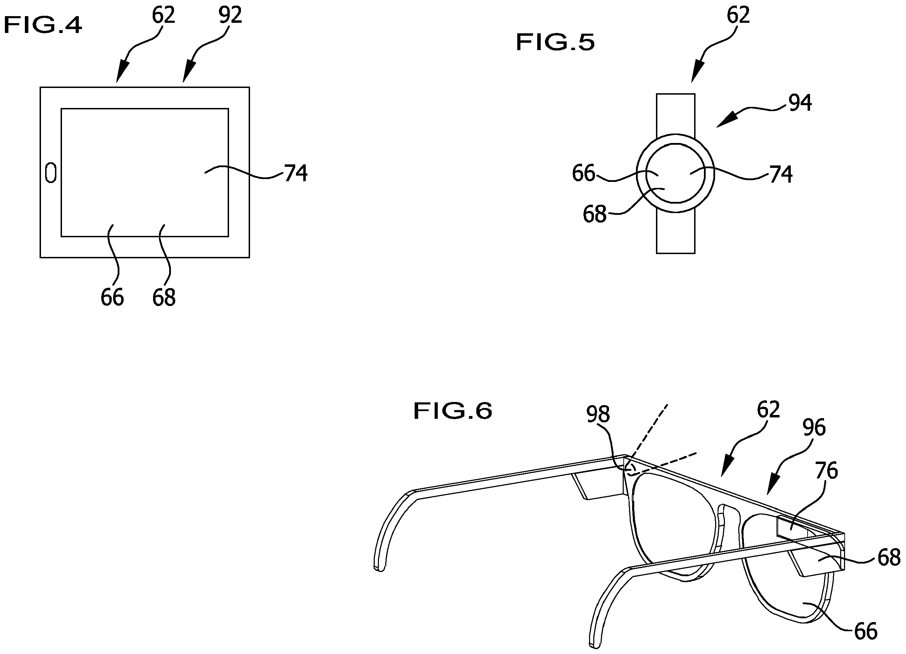

Zum anderen ist denkbar, dass andersartige Zusatzgeräte 62 zum Einsatz kommen. Beispiele hierfür sind in den Figuren 4 bis 6 dargestellt.

Figur 4 zeigt ein Zusatzgerät 62, ausgestaltet als Tablet-Computer 92. Figur 5 zeigt ein Zusatzgerät 62, ausgestaltet als Smartwatch 94. Figur 6 zeigt ein Zusatzgerät 62, ausgestaltet als Head-mounted-device, insbesondere in Gestalt einer Datenbrille 96.

Es versteht sich, dass die am Beispiel des Smartphones 72 beschriebenen Funktionen beim Tablet-Computer 92, der Smartwatch 94 und der Datenbrille 96 ebenfalls umgesetzt sein können. Im Fall der Datenbrille 96 ist die Ausgabeeinheit 68 insbesondere als im Sichtfeld des Benutzers angeordnetes Display ausgebildet, zur visuellen Darstellung von Informationen. Die Eingabeeinheit 66 ist insbesondere sprachlich ausgebildet. Vorzugsweise kann eine optische Eingabeeinheit 66 vorgesehen sein.

Eine optische Eingabeeinheit 66 kann beispielsweise eine Kamera und insbesondere Digitalkamera 98 aufweisen, die beim Smartphone 72 ebenfalls vorgesehen sein kann. Die Eingabeeinheit 66 kann zum Beispiel eine andersartige Erfassungseinheit aufweisen, mit der der zu reinigende Gegenstand zum Beispiel mittels RFID-Technologie erfassbar ist. Das Bezugszeichen 100 kennzeichnet in Figur 3 eine entsprechende Erfassungseinheit.

Die Interaktion des Benutzers mit dem Hochdruckreinigungssystem 10 zum Erhalt einer Reinigungsempfehlung kann über das Zusatzgerät 62 mit Benutzeranwendungsprogramm beispielsweise auf eine der nachfolgend erläuterten Weisen erfolgen.

Beispielhaft wird beschrieben, wie die Steuereinheit 76, die Steuereinheit 82 oder die Steuereinheit 32 Informationen verarbeiten können. Hierbei kann insbesondere vorgesehen sein, dass die Verarbeitung von Informationen, zum Beispiel das Bereitstellen von Reinigungsempfehlungen, der Empfang von Interaktionsinformationen und/oder deren Weiterleitung, von nur einer der Steuereinheiten oder einer Kombination von zwei oder mehr Steuereinheiten durchgeführt wird, die hierfür jeweils zum Einsatz kommen können. Beispielsweise wird die Reinigungsempfehlung von der Steuereinheit 82 bereitgestellt und an das Zusatzgerät 62 übertragen. Etwaige Interaktionsinformationen können von dessen Steuereinheit 76 erfasst und zum Beispiel direkt oder indirekt an die Steuereinheit 32 des Hochdruckreinigungsgerätes 12 und/oder die Steuereinheit 82 übertragen werden.

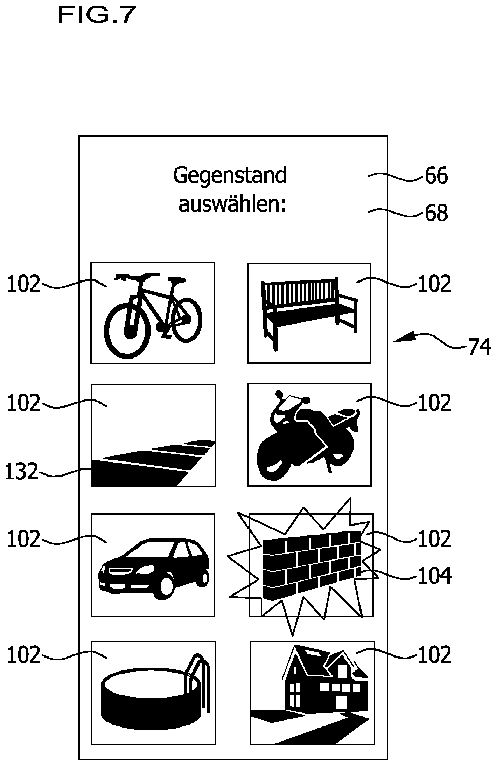

Über die App kann die Auswahl des zu reinigenden Gegenstandes vorgenommen werden. Die beispielhafte Darstellung von Figur 7 zeigt anhand von Piktogrammen 102 mehrere zu reinigende Gegenstände in generischer Form. Bei den Gegenständen handelt es sich beispielsweise um eine Auswahl üblicherweise mit dem Hochdruckreinigungsgerät 12 gereinigter Gegenstände.

Die am Touchscreen 74 angezeigten Piktogramme 102 können vom Benutzer ausgewählt werden. Es ist im vorliegenden Beispiel angenommen, dass der Benutzer das mit dem Bezugszeichen 104 gesondert referenzierte Piktogramm 102 berührt, das ein Mauerwerk o. ä. als zu reinigenden Gegenstand zeigt.

Der Benutzer erhält daraufhin eine Reinigungsempfehlung, vorliegend durch Anzeige an der Ausgabeeinheit 68 des Touchscreens 74. Zu diesem Zweck wird die Eingabe an eine Steuereinheit des Hochdruckreinigungssystems 10 übertragen. Beispielsweise kommt zu diesem Zweck die Steuereinheit 82 zum Einsatz. Die Steuereinheit 82 kann aus der Speichereinheit 84 ein darin hinterlegtes Reinigungsprofil laden. In einem jeweiligen Reinigungsprofil ist, verknüpft mit dem zu reinigenden Gegenstand, gespeichert, welches Zubehörteil 38 und welche Werte von Betriebsparametern des Hochdruckreinigungsgerätes 12 vorzugsweise verwendet werden sollten.

Die diesbezügliche Reinigungsempfehlung kann von der Steuereinheit 82 an das Zusatzgerät 62 übertragen werden.

Alternativ oder ergänzend ist denkbar, dass die Reinigungsempfehlung von der Steuereinheit 32 oder 76 bereitgestellt wird. Reinigungsprofile können zum Beispiel in der Speichereinheit 78 des Zusatzgerätes 62 gespeichert sein.

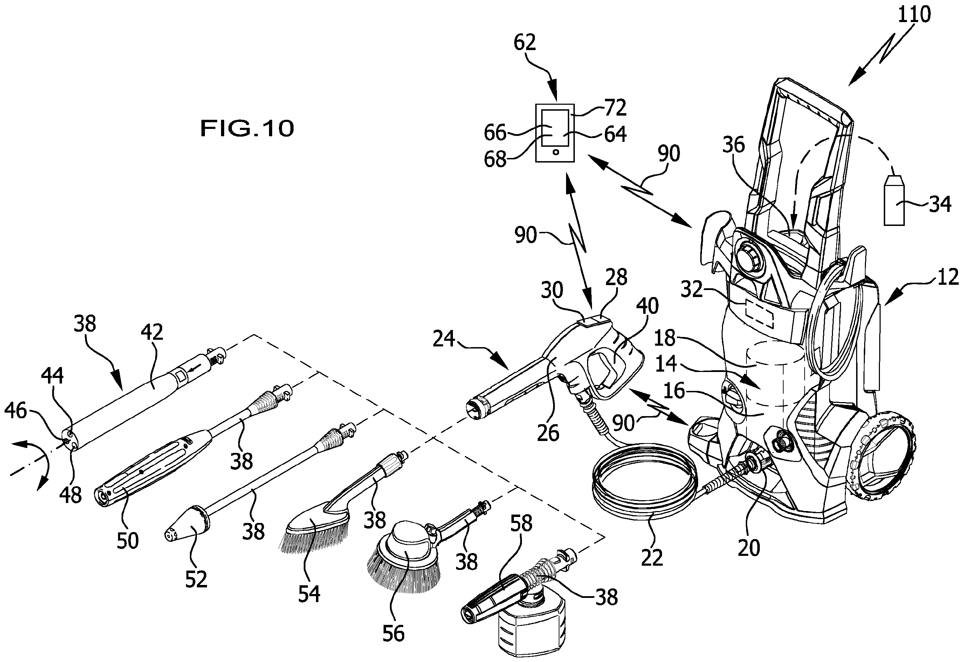

Bei einem derartigen Hochdruckreinigungssystem kann vorgesehen sein, dass die externe Datenverarbeitungseinrichtung 80 und die Speichereinheit 84 entfallen. Ein derartiges erfindungsgemäßes Hochdruckreinigungssystem ist in Figur 10 in einer der Figur 1 entsprechenden Weise dargestellt und dort mit dem Bezugszeichen 110 belegt.

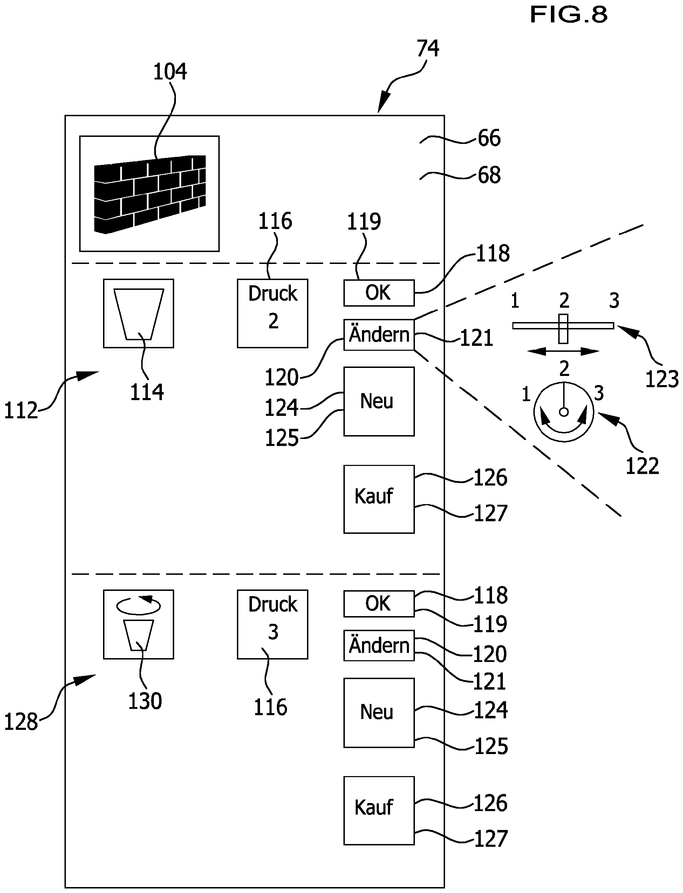

Figur 8 zeigt schematisch mit dem Bezugszeichen 112 belegt eine an der Ausgabeeinheit 68 dargestellte Reinigungsempfehlung für den Benutzer. Verknüpft mit dem Piktogramm 104, beispielsweise, ist ein von der Steuereinheit 82 vorgeschlagenes Zubehörteil 38 dargestellt. Hierbei handelt es sich um ein Piktogramm der Austragseinheit 50 oder 44. Dementsprechend wird der Benutzer darauf hingewiesen, dass vorteilhafterweise eine Flachstrahldüse eingesetzt werden sollte. Das Piktogramm trägt das Bezugszeichen 114.

Günstig ist es, wenn zusätzlich der Wert mindestens eines Betriebsparameters von der Reinigungsempfehlung 112 umfasst ist. Im vorliegenden Fall wird über ein Symbol 116 angezeigt, dass vorteilhafterweise die Druckstufe 2 des Hochdruckreinigungsgerätes 12 eingesetzt werden sollte.

Bei der vorliegenden Erfindung ist es günstig, dass zusätzlich mit der Reinigungsempfehlung 112 mindestens ein Interaktionselement für den Benutzer bereitgestellt wird. Im vorliegenden Fall wird ein Interaktionselement 118 für den Benutzer als Bestandteil der Reinigungsempfehlung 112 dargestellt. Das Interaktionselement 118 ist ein Bestätigungselement 119. Durch Betätigen des Bestätigungselementes 119 wird eine Interaktionsinformation an die Steuereinheit 32, 76 oder 82 übertragen.

Die Interaktionsinformation kann im vorliegenden Fall lediglich eine Quittierung des Benutzers sein, dass er die Empfehlung für den Wert des Betriebsparameters "Druck" zur Kenntnis nimmt.

Günstig ist es, wenn auf die Bestätigung des Benutzers eine Einstellung des Hochdruckreinigungsgerätes 12 gemäß der Reinigungsempfehlung 112 vorgenommen wird. Dabei kann insbesondere die Druckstufe auf den Wert 2 eingestellt werden.

Die diesbezügliche Interaktionsinformation des Benutzers bei Betätigen des Bestätigungselementes 119 kann direkt oder indirekt an das Hochdruckreinigungsgerät 12 übertragen werden. Beispielsweise nimmt die Steuereinheit 76 die Information entgegen und überträgt sie an die Steuereinheit 32, von der die Druckstufe entsprechend der Reinigungsempfehlung 112 eingestellt wird.

Die Übermittlung der Information an das Hochdruckreinigungsgerät 12 kann vom Zusatzgerät 82 oder von der Datenverarbeitungseinrichtung 80 ohne oder mit Zutun des Benutzers erfolgen.

Ein weiteres Interaktionselement 120 ist als Änderungselement 121 ausgebildet. Durch Betätigen des Änderungselementes 121 kann beispielsweise ein Dreh-/ oder Schieberegler 122 bzw. 123 (rechts in Figur 8) für den Benutzer angezeigt werden. Anhand eines der Regler 122, 123 kann der Benutzer eine gewünschte Druckstufe vorgeben. Deren Wert kann vorzugsweise an das Hochdruckreinigungsgerät 12 übertragen und dieses ohne weiteres Zutun des Benutzers automatisch eingestellt werden.

Als Bestandteil der Reinigungsempfehlung 112 kann beispielsweise ein Interaktionselement 124 vorgesehen sein. Das Interaktionselement 124 ist ein Aufforderungselement 125. Durch Betätigen des Aufforderungselementes 125 kann der Benutzer eine Interaktionsinformation an die Steuereinheit 82 übermitteln mit der Bitte um Bereitstellung einer andersartigen Reinigungsempfehlung. Diese kann daraufhin ebenfalls an der Ausgabeeinheit 68 bereitgestellt werden.

Als Bestandteil der Reinigungsempfehlung 112 kann ein weiteres Interaktionselement 126 vorgesehen sein. Das Interaktionselement 126 ist im vorliegenden Fall ein Erwerbselement 127. Durch Betätigen des Erwerbselementes 127 kann der Benutzer einen Erwerbswunsch an die Datenverarbeitungseinrichtung 80 übertragen. Dies ist beispielsweise dann von Vorteil, wenn der Benutzer nicht im Besitz des gemäß der Reinigungsempfehlung 112 vorgeschlagenen Zubehörteils 38 ist.

Die Steuereinheit 82 kann mehrere Reinigungsempfehlungen auf den Reinigungswunsch des Benutzers bereitstellen. Zusätzlich zur Reinigungsempfehlung 112 ist in Figur 8 beispielhaft eine weitere Reinigungsempfehlung 128 dargestellt. Über das Piktogramm 130 wird als Zubehörteil 38 die Rotordüse 46 oder die Austragseinheit 52 mit Rotordüse vorgeschlagen. Als Druckstufe für den Betriebsparameter "Druck" wird die Stufe 3 vorgeschlagen.

Auch die Reinigungsempfehlung 128 kann die Interaktionselemente 118, 120, 124 und 126 umfassen.

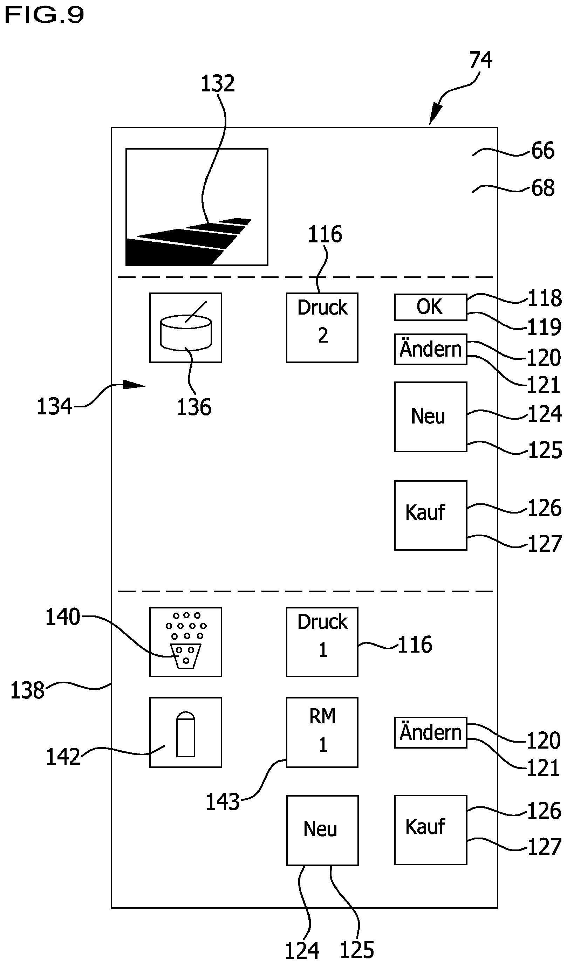

Figur 9 zeigt ein weiteres Beispiel von Reinigungsempfehlungen, die dem Benutzer über die Ausgabeeinheit 68 des Touchscreens 74 bereitgestellt werden können. Dabei wird angenommen, dass der Benutzer als zu reinigenden Gegenstand das mit dem Bezugszeichen 132 referenzierte Piktogramm ausgewählt und übermittelt hat, in dem ein mit Steinfliesen belegter Weg dargestellt ist.

Eine Reinigungsempfehlung 134 schlägt mittels des Piktogrammes 136 die Nutzung des Flächenreinigungsgerätes 60 als Zubehörteil 38 vor. Als Wert für den Betriebsparameter "Druck" wird die Druckstufe 2 vorgeschlagen.

Eine weitere Reinigungsempfehlung 138, zum Beispiel zur Vorreinigung, schlägt mittels des Piktogrammes 140 als Zubehörteil 38 die Austragseinheit 48 mit der Niederdruck-Reinigungsmitteldüse vor. Darüber hinaus wird mit dem Piktogramm 142 der Einsatz des Behälters 34 mit Reinigungschemikalie vorgeschlagen.

Für den Betriebsparameter "Druck" wird die Stufe 1 vorgeschlagen. Für den Betriebsparameter "Beimischverhältnis" wird die Stufe 1 vorgeschlagen (Symbol 143).

Auch bei den Reinigungsempfehlungen, die beispielhaft in Figur 9 dargestellt sind, kann der Benutzer Interaktionsinformationen mittels der Interaktionselemente 118, 120, 124 und 126 übertragen.

Über das mindestens eine Interaktionselement 118, 120, 124 und 126 besteht in Kombination mit der Rückmeldung der Steuereinheit 82, 76 oder 32 über die Ausgabeeinheit 68 die Möglichkeit eines Dialogs des Benutzers mit dem Hochdruckreinigungssystem 10. Dem Benutzer kann dadurch eine Reinigungsempfehlung unterbreitet werden, um ein möglichst gutes Reinigungsergebnis zu erzielen. Zugleich kann der Benutzer zur Bedienung des Hochdruckreinigungsgerätes 12 angeleitet werden. Dabei kann vorteilhafterweise sichergestellt werden, dass der zu reinigende Gegenstand nicht beschädigt wird. Beispielsweise wird nur ein derartiges Zubehörteil 38 empfohlen, das am Gegenstand keine Schädigung verursacht.

Zu letzterem Zweck kann es von Vorteil sein, wenn abhängig vom vorgeschlagenen oder verwendeten Zubehörteil 38 der Wert mindestens eines Betriebsparameters vom Hochdruckreinigungsgerät 12 beschränkt wird.

Vorgesehen sein kann, dass das verwendete Zubehörteil 38 und der Wert mindestens eines Betriebsparameters erkannt und insbesondere überwacht wird. Beispielsweise können Fehlbedienungen des Benutzers dadurch abgefangen werden, dass bei Abweichen von der Reinigungsempfehlung das Hochdruckreinigungsgerät 12 oder das Pumpaggregat 14 deaktiviert wird. Alternativ oder ergänzend kann dem Benutzer ein Hinweis bereitgestellt werden, beispielsweise am Hochdruckreinigungsgerät 12, an der Bedieneinheit 24 und/oder der Ausgabeeinheit 68. Alternativ oder ergänzend kann der Wert mindestens eines Betriebsparameters vom Hochdruckreinigungsgerät 12 selbsttätig auf den Wert gemäß der Reinigungsempfehlung gesetzt werden. Dabei kann insbesondere sichergestellt werden, dass ein maximaler Wert für den Betriebsparameter nicht überschritten wird.

Im Fall einer Fehlbedienung können Informationen betreffend den Einsatz des Zubehörteils 38 und den Wert mindestens eines Betriebsparameters erfasst und zum Beispiel zur Speicherung an die Speichereinheit 84 oder 78 übertragen werden. Abhängig hiervon können möglicherweise Ausschlüsse der Gewährleistung erfolgen. Günstig ist es auch, wenn dem Benutzer Vorschläge zur Verbesserung der Reinigung unterbreitet werden können.

Unabhängig von etwaigen Fehlbedienungen ist es günstigerweise vorgesehen, dass Nutzungsinformationen vom Hochdruckreinigungsgerät 12 übertragen und in einer der Speichereinheiten 84 und 76 gespeichert werden können, beispielsweise die Nutzungsdauer, Nutzungszeiten, den Einsatz der Zubehörteile 38 und/oder Werte für mindestens einen Betriebsparameter.

Anstelle der vorstehend beschriebenen Vorgabe des zu reinigenden Gegenstandes über eines der Piktogramme 102 kann vorgesehen sein, dass die App an der Eingabeeinheit 66 beispielsweise ein Textfeld zur Eingabe des Gegenstandes, eine Auswahlliste oder eine Abbildung des tatsächlichen Gegenstandes bereitstellt.

Beispielsweise für den letzteren Fall kann insbesondere vorgesehen sein, dass in einer Speichereinheit 78 oder 84 ein Benutzerprofil für den Benutzer gespeichert ist. Verknüpft mit dem Benutzerprofil ist beispielsweise mindestens ein individualisierter zu reinigender Gegenstand. Beispielsweise ist nicht nur ein generischer Gegenstand "Kraftfahrzeug" verknüpft mit einem Reinigungsprofil in der Speichereinheit 78, 84 hinterlegt, sondern der tatsächliche Gegenstand "Kraftfahrzeug des Benutzers".

Verknüpft mit dem individualisierten Gegenstand kann insbesondere eine Information darüber gespeichert sein, welche Beschaffenheit der Gegenstand aufweist, zum Beispiel welches Material. Abhängig von der Beschaffenheit kann eine optimierte Reinigungsempfehlung ausgegeben werden.

Beim Vorsehen eines Benutzerprofils für den Benutzer kann mit diesem insbesondere die Information verknüpft gespeichert sein, welche Zubehörteile 38 der Benutzer besitzt. Vorgesehen sein kann, dass die Reinigungsempfehlung nur diejenigen Zubehörteile 38 berücksichtigt, die der Benutzer tatsächlich besitzt und mit seinem Benutzerprofil verknüpft sind. Für den Benutzer nicht umsetzbare Reinigungsempfehlungen können auf diese Weise vermieden werden.

Anderenfalls kann vorgesehen sein, dass die Reinigungsempfehlung unabhängig von den gespeicherten Zubehörteilen 38 bereitgestellt wird, hierbei kann insbesondere das Interaktionselement 126 als Erwerbselement 127 von Bedeutung für den Benutzer sein, ein nicht vorhandenes Zubehörteil 38 zu erwerben.

Im Benutzerprofil ist vorteilhafterweise der Typ des Hochdruckreinigungsgerätes 12 hinterlegt, in dessen Besitz der Benutzer ist. Die Reinigungsempfehlungen können von der Steuereinheit 82, 76 oder 32 vorzugsweise abhängig vom Typ des hinterlegten Hochdruckreinigungsgerätes 12 bereitgestellt werden, um sicherzustellen, dass Zubehörteile 38 empfohlen werden, die mit dem Hochdruckreinigungsgerät 12 kompatibel sind.

Beim Erwerb des Hochdruckreinigungsgerätes 12 können ein oder mehrere Zubehörteile 38 Bestandteil einer Grundausstattung sein. Durch Hinzufügen des Hochdruckreinigungsgerätes 12 zum Benutzerprofil besteht auf diese Weise die Möglichkeit, im Benutzerprofil automatisch zu hinterlegen, welche Zubehörteile 38 der Benutzer besitzt. Diese Zubehörteile 38 müssen nicht weiter im Benutzerprofil eingepflegt werden.

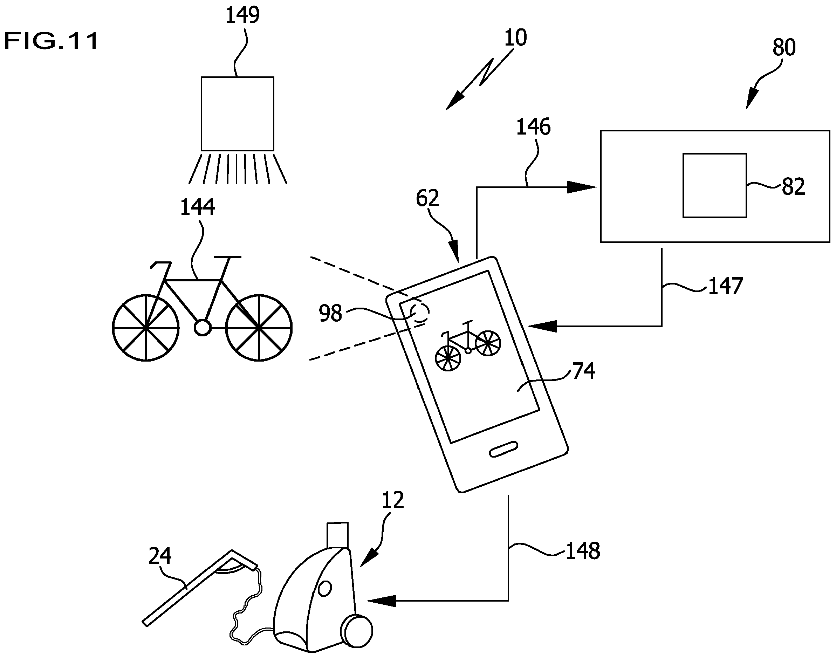

Figur 11 zeigt erneut das Hochdruckreinigungssystem 10 in schematischer, vereinfachter Darstellung. Dabei kommt eine automatische Erkennung des zu reinigenden Gegenstandes, hier zum Beispiel eines Fahrrades 144, zum Einsatz.

Mittels der Digitalkamera 98 kann eine Aufnahme des Fahrrades 144 erstellt werden. Diesbezügliche Bildinformationen werden vom Zusatzgerät 62 an die Steuereinheit 82 weitergeleitet.

In der Steuereinheit 82 sind Bildverarbeitungsalgorithmen gespeichert, anhand derer der Gegenstand als Fahrrad 144 identifiziert werden kann. Vorzugsweise kann die Beschaffenheit des Fahrrades 144 ebenfalls ermittelt werden, zum Beispiel dessen Material und/oder dessen Verschmutzungsgrad.

Auf Basis der ermittelten Informationen kann die Steuereinheit 32, 76 oder 82 eine Reinigungsempfehlung am Zusatzgerät 62 bereitstellen. Die für die Reinigungsempfehlung erforderlichen Informationen können zum Beispiel in der Steuereinheit 82 korreliert werden. Anderenfalls kann vorgesehen sein, dass die Information, dass es sich bei dem Gegenstand um ein Fahrrad 144 handelt, an das Zusatzgerät 62 übertragen wird, von dem die für die Reinigungsempfehlung erforderlichen Informationen hinzukorreliert werden.

Werte für den mindestens einen Betriebsparameter können vom Zusatzgerät 62 oder von der Steuereinheit 76 oder 82 an das Hochdruckreinigungsgerät 12 übermittelt werden, direkt oder indirekt.

Mindestens ein Betriebsparameter kann vorteilhafterweise automatisch am Hochdruckreinigungsgerät 12 eingestellt werden. Die mit dem Bezugszeichen 146, 147 und 148 belegten Pfeile veranschaulichen schematisch und beispielhaft den Ablauf des Verfahrens.

Vorgesehen sein kann alternativ, dass die Steuereinheit 76 die Bildinformationen unmittelbar analysiert und feststellt, dass es sich bei dem Gegenstand um ein Fahrrad 144 handelt. Die Reinigungsempfehlung kann auf Basis dieser Informationen von der Steuereinheit 76 übertragen und vorzugsweise an das Hochdruckreinigungsgerät 12 zum Einstellen mindestens eines Betriebsparameters übertragen werden.

Figur 11 zeigt eine mit dem Bezugszeichen 149 belegte Erfassungseinheit, die vorliegend getrennt vom Zusatzgerät 62 gebildet ist. Die Erfassungseinheit 149 erlaubt es, Informationen über den Gegenstand zu sammeln und zur Ermittlung, worum es sich dabei handelt und/oder wie der Gegenstand beschaffen ist, an eine der Steuereinheiten 32, 76 oder 82 zu übertragen. Beispielsweise ist die Erfassungseinheit 149 eine spektroskopische Einheit. Auf Basis der übermittelten Informationen kann festgestellt werden, dass es sich um das Fahrrad 144 handelt und/oder wie dieses beschaffen ist.

Vorgesehen sein kann insbesondere, dass auf Basis der Informationen einer der Erfassungseinheiten 100, 149 oder 98, in Gestalt der Digitalkamera, die Beschaffenheit des Gegenstandes ermittelt werden kann. Die Steuereinheit kann anhand der übermittelten Informationen beispielsweise feststellen, aus welchem Material der Gegenstand besteht. Abhängig von der Beschaffenheit kann die Reinigungsempfehlung im Hinblick auf ein bestmögliches Reinigungsergebnis bereitgestellt werden.

Alternativ zur optischen Erfassung des zu reinigenden Gegenstandes kann eine andersartige Erfassung denkbar sein. Beispielsweise kommt eine Erfassung mittels RFID-Technologie zum Einsatz.

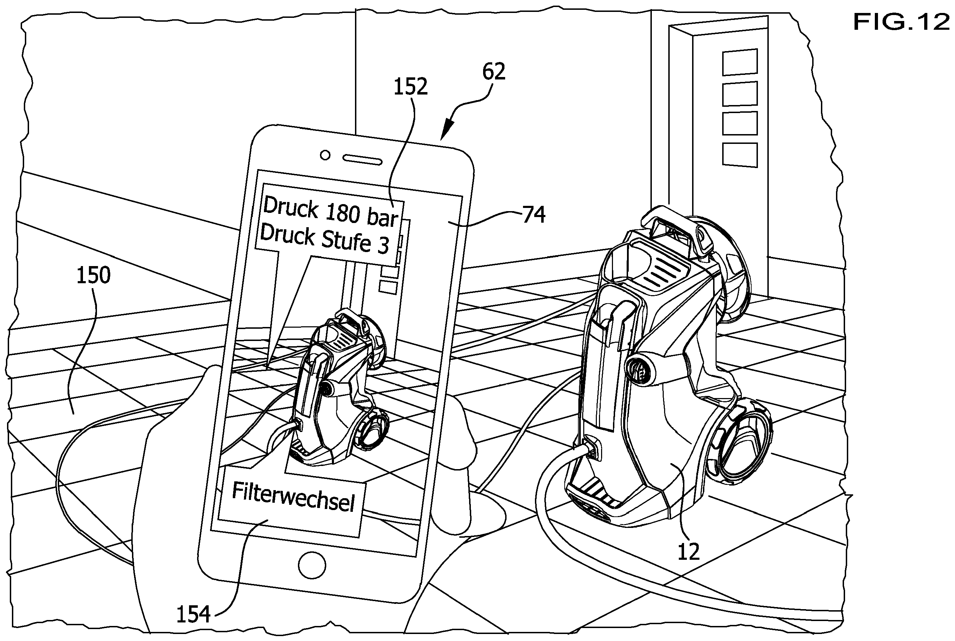

Figur 12 zeigt das Zusatzgerät 62 in einer weiteren Anwendung des Hochdruckreinigungssystems 10. Dabei kommt als zu reinigender Gegenstand eine Terrasse 150 zum Einsatz. Mittels der Digitalkamera 98 wird die Terrasse 150 optisch erfasst. Diesbezügliche Bildinformationen werden von der Steuereinheit 82 verarbeitet. Am Zusatzgerät 62 wird eine entsprechende Reinigungsempfehlung bereitgestellt.

Bei dem in Figur 12 dargestellten Beispiel wird die Reinigungsempfehlung mittels augmentierter Realität durch Einblendung einer Bildinformation 152, mit welchem Druck die Terrasse zu reinigen ist, bereitgestellt.

Darüber hinaus wird mittels einer Bildinformation 154 eine Anleitung für den Benutzer zur Handhabung und insbesondere zur Wartung des Hochdruckreinigungsgerätes 12 bereitgestellt, das ebenfalls von der Digitalkamera 98 erfasst worden ist.

Nachfolgend wird unter Verweis auf die Figuren 13 bis 28 auf eine beispielhafte Umsetzung des erfindungsgemäßen Hochdruckreinigungssystems 10 eingegangen. Dabei können die Funktionen des Hochdruckreinigungssystems 10 gemäß einer der vorstehend beschriebenen Weisen umgesetzt sein. Zunächst wird unter Verweis auf die Figuren 13 bis 15 auf eine mögliche Ausgestaltung des Benutzeranwendungsprogramms (App) des Zusatzgerätes 62 eingegangen. Im Anschluss daran wird auf eine mögliche Ausgestaltung der App des Zusatzgerätes 62 eingegangen, die vom Benutzer wahlweise anstelle der zuerst beschriebenen Ausgestaltung genutzt werden kann.

Figur 13 zeigt den Bildinhalt des Touchscreens 74 in einer der Figur 7 entsprechenden Weise, mit den Piktogrammen 102 der zu reinigenden Gegenstände. Im vorliegenden Fall wird beispielhaft das Piktogramm 156 ausgewählt. Der Benutzer gibt dadurch vor, dass es sich bei dem zu reinigenden Gegenstand um ein Fahrrad handelt.

Die Steuereinheit 82, 76 oder 32 stellt daraufhin eine Reinigungsempfehlung 158 am Touchscreen 74 bereit. Die Reinigungsempfehlung 158 umfasst ein Symbol 160 des Fahrrades und ein Symbol 162 eines Wertes für den Betriebsparameter. Im vorliegenden Fall handelt es sich dabei um den Druck der Reinigungsflüssigkeit. Vorgeschlagen wird, die Druckstufe "2" zu verwenden.

Des Weiteren umfasst die Reinigungsempfehlung 158 ein Piktogramm 164 des vorgeschlagenen Zubehörteils 38. Das Piktogramm 164 stellt im vorliegenden Fall die Austragsvorrichtung 42 in ihrer Nutzung als Flachstrahldüse der Austragseinheit 44 dar. Alternativ könnte die Austragseinheit 50 eingesetzt werden.

Die Reinigungsempfehlung 158 umfasst ferner ein Interaktionselement 166, das als Bestätigungselement 167 ausgebildet ist. Durch Betätigen des Bestätigungselementes 167 wird das Hochdruckreinigungsgerät 12 auf die Druckstufe 2 eingestellt (Figur 14), wobei die Übertragung der diesbezüglichen Informationen direkt oder indirekt erfolgen kann.

Figur 15 zeigt die Bildanzeige des Touchscreens 74 während des Betriebs. Wie bereits erläutert wird dabei handhabungsfreundlich für den Benutzer der Bildinhalt 33 der Ausgabeeinheit 30 der Hochdruckpistole 26 gespiegelt. Die Schaltflächen 331, 332 und 334 bilden Interaktionselemente 168, 169 bzw. 170. Durch deren Betätigung kann der Benutzer die Druckstufe inkrementieren (331), dekrementieren (332) oder den "Boost"-Modus vorrübergehend aktivieren (334).

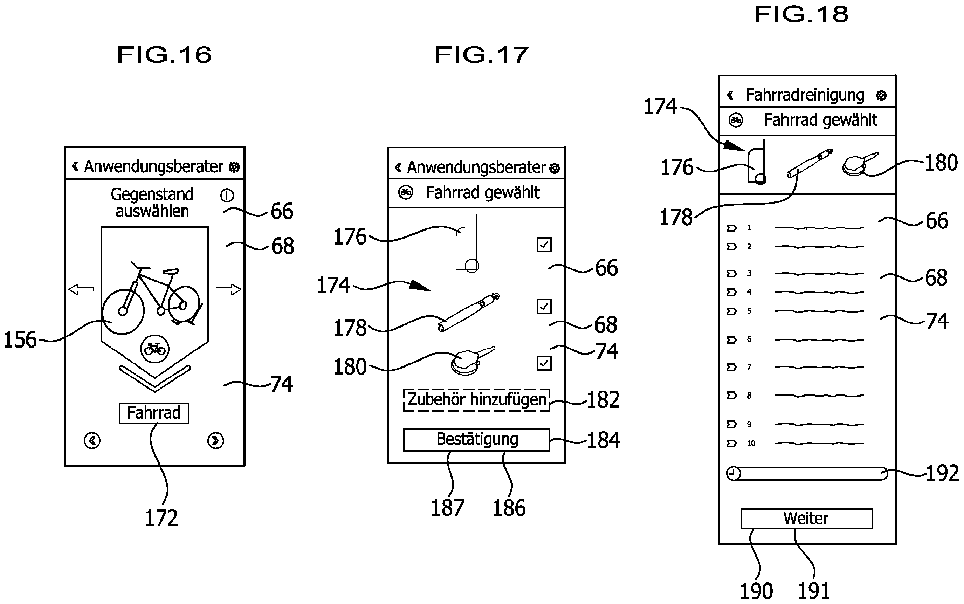

In den Figuren 16 bis 28 ist beispielhaft eine Funktionalität der App des Zusatzgerätes 62 am Touchscreen 74 symbolisiert.

Zunächst kann der Benutzer den zu reinigenden Gegenstand auswählen (Figur 16). Am Touchscreen 74 ist zu diesem Zweck beispielhaft das Piktogramm 156 mit dem Fahrrad dargestellt. Durch "Wischen" rechts und links besteht für den Benutzer die Möglichkeit der Auswahl eines andersartigen Reinigungsgegenstandes.

Auf die Betätigung einer Schaltfläche 172 wird am Touchscreen 74 über die Steuereinheit 82, 76 oder 32 eine Reinigungsempfehlung 174 bereitgestellt (Figur 17). Die Reinigungsempfehlung 174 wird im vorliegenden Fall insbesondere auf Basis der Informationen des Benutzerprofils erstellt. Im Benutzerprofil ist gespeichert, was für einen Typ Hochdruckreinigungsgerät 12 und welche Zubehörteile 38 der Benutzer besitzt.

Die Reinigungsempfehlung 174 umfasst Symbole 176, 178 und 180 des zu verwendenden Hochdruckreinigungsgerätes 12 sowie der Zubehörteile 38. Hierbei symbolisiert das Symbol 178 die Austragsvorrichtung 42 und das Symbol 180 die Waschbürste 56. Eine Schaltfläche 182 ermöglicht es dem Benutzer, das Benutzerprofil zu warten und erforderlichenfalls weitere Zubehörteile 38 in seinem Profil zu hinterlegen.

Eine weitere Schaltfläche 184 bildet ein Interaktionselement 186 als Bestandteil der Reinigungsempfehlung 174. Das Interaktionselement 186 ist ein Aufforderungselement 187. Bei dessen Betätigung übermittelt der Benutzer die Interaktionsinformation zum Bereitstellen einer Schritt-für-Schritt-Anleitung mit Reinigungshinweisen zum Reinigen des Fahrrads. Die Interaktionsinformation wird an die Steuereinheit 82, 76 oder 32 übertragen, woraufhin schrittweise Reinigungsempfehlungen am Touchscreen 74 dargestellt werden (Figuren 18 bis 28).

Die Reinigungsempfehlung 174 umfasst Reinigungshinweise 194. Ein jeweiliger Reinigungshinweis 194 wird zusammen mit einem weiteren Interaktionselement 190 in Gestalt eines Aufforderungselementes 191 am Touchscreen 74 dargestellt. Das Aufforderungselement 191 löst bei Betätigung durch den Benutzer jeweils die Übermittlung einer Interaktionsinformation mit dem Ziel aus, den nachfolgenden Reinigungshinweis bereitzustellen. Am Ende wird die Anleitung mittels des Interaktionselementes 190 beendet.

Zunächst kann es vorteilhaft sein, dem Benutzer zusammenfassend den bevorzugten Ablauf der Reinigung des Fahrrads am Touchscreen 74 anzuzeigen (Figur 18). Die einzelnen Reinigungsschritte sind dabei in der vorgeschlagenen Reihenfolge geordnet und inkrementierend mit "1, 2, 3 ... 10" gekennzeichnet.

Die geschätzte Reinigungsdauer kann dem Benutzer beispielsweise mittels eines Symbols 192 angezeigt werden.

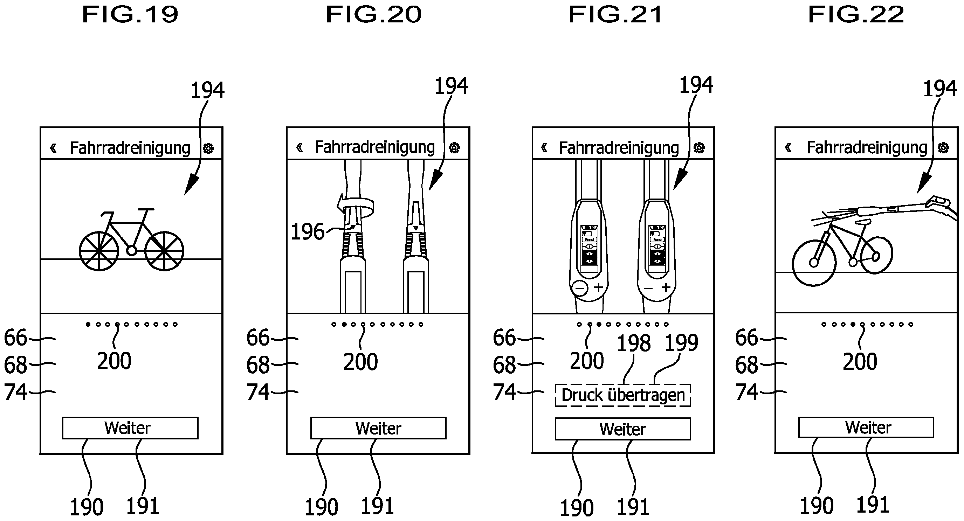

Nach Betätigung des Aufforderungselementes 191 werden die anhand der Figuren 19 bis 28 beispielhaft dargestellten Reinigungshinweise, die jeweils mit dem Bezugszeichen 194 belegt sind, angezeigt. Dabei kommen bei einer bevorzugten Ausführungsform der Erfindung graphische Darstellungen am Touchscreen 74 zum Einsatz. Vorgesehen sein kann alternativ oder ergänzend ein Hinweis in Textform und/oder durch Sprachausgabe.

Der erste Reinigungshinweis 194 gemäß Figur 19 leitet den Benutzer an, den Reinigungsgegenstand, im Beispiel das Fahrrad, geeignet zu positionieren.

Der zweite Reinigungshinweis 194 gemäß Figur 20 leitet den Benutzer an, als Zubehörteil 38 die Austragsvorrichtung 42 mit der Austragseinheit 44 zu verwenden, erkennbar durch Nutzung des Symbols 196 für die Flachstrahldüse.

Der dritte Reinigungshinweis 194 gemäß Figur 21 leitet den Benutzer an, den Betriebsparameter "Druck" durch Betätigung der Schaltfläche 332 am Touchscreen 74 oder alternativ an der Hochdruckpistole 26 auf den Wert "2" einzustellen. Bei Verwendung des Touchscreens 74 kann über ein Interaktionselement 198 in Gestalt eines Aufforderungselementes 199 der Wert des Betriebsparameters an das Hochdruckreinigungsgerät 12 übertragen und von diesem automatisch eingestellt werden.

Der vierte Reinigungshinweis 194 gemäß Figur 22 leitet den Benutzer an, das Fahrrad zunächst mittels der Flachstrahldüse zu reinigen.

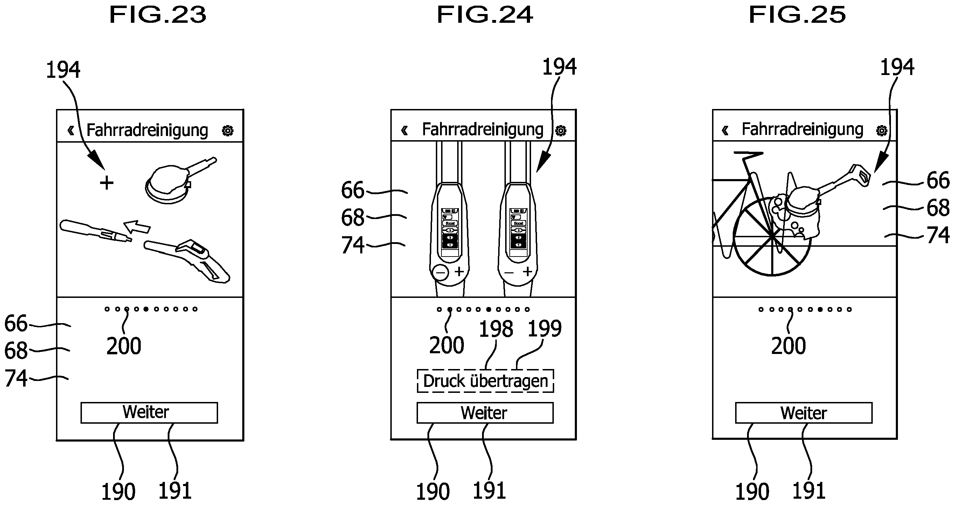

Der fünfte Reinigungshinweis 194 gemäß Figur 23 leitet den Benutzer an, die Austragsvorrichtung 42 gegen die Waschbürste 56 zu tauschen, um die Reinigung mit dieser fortzusetzen.

Der sechste Reinigungshinweis 194 gemäß Figur 24 leitet den Benutzer an, den Wert für den Betriebsparameter "Druck", sofern erforderlich, auf die Stufe "2" einzustellen. Auch in diesem Fall besteht die Möglichkeit, den Wert unter Nutzung des Aufforderungselementes 199 an das Hochdruckreinigungsgerät 12 zu übertragen.

Der siebte Reinigungshinweis 194 gemäß Figur 25 leitet den Benutzer an, das Fahrrad mit der Waschbürste 56 zu reinigen und diese dabei über sämtliche Komponenten des Fahrrades zu bewegen.

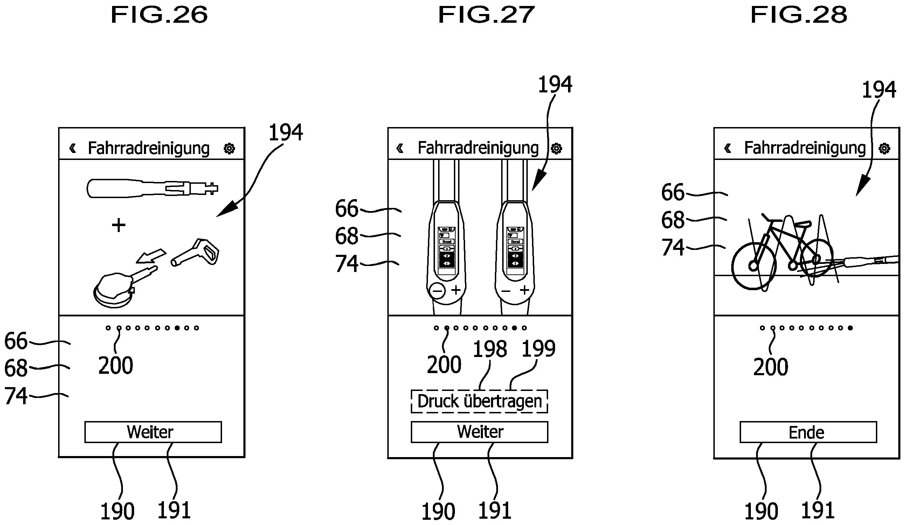

Der achte Reinigungshinweis 194 gemäß Figur 26 leitet den Benutzer an, die Waschbürste 56 durch die Austragsvorrichtung 42 zu ersetzen, um die Reinigung mit dieser fortzusetzen.

Der neunte Reinigungshinweis 194 gemäß Figur 27 leitet den Benutzer an, erforderlichenfalls erneut den Betriebsparameter "Druck" auf die Stufe "2" einzustellen, gegebenenfalls unter Nutzung des Aufforderungselementes 199.

Der zehnte Reinigungshinweis 194 gemäß Figur 28 leitet den Benutzer an, das Fahrrad unter Nutzung der Austragsvorrichtung 42, speziell der Flachstrahldüse, abschließend zu reinigen.

Ein Fortschrittselement 200, das vorzugsweise bei jedem der Reinigungsschritte angezeigt werden kann, verdeutlicht dem Benutzer auf intuitive Weise, wie weit die Reinigung fortgeschritten ist.

Es versteht sich, dass eine Anleitung zum Reinigen des Gegenstandes auf andersartige Weise bereitgestellt werden kann, als dies voranstehend beispielhaft unter Verweis auf die Figuren 18 bis 28 erläutert wurde.

Es versteht sich, dass eine Reinigungsempfehlung und eine Anleitung zum Reinigen des Gegenstandes auch dann bereitgestellt werden kann, wenn keine Kommunikation zwischen dem Zusatzgerät 62 und dem Hochdruckreinigungsgerät 12 möglich ist.

### Bezugszeichenliste:

- 10: Hochdruckreinigungssystem
- 12: Hochdruckreinigungsgerät
- 14: Pumpaggregat
- 16: Hochdruckpumpe
- 18: Antriebsmotor
- 20: Hochdruckausgang
- 22: Schlauchleitung
- 24: Bedieneinheit
- 26: Hochdruckpistole
- 28: Eingabeeinheit
- 30: Ausgabeeinheit
- 32: Steuereinheit
- 33: Bildinhalt
- 331: Schaltfläche
- 332: Schaltfläche
- 334: Schaltfläche
- 335: Anzeigeelement
- 34: Behälter
- 36: Aufnahme
- 38: Zubehörteil
- 40: Handhabe
- 42: Austragsvorrichtung
- 44, 46, 48, 50, 52, 54, 56: Waschbürste
- 58: Schaumdüse
- 60: Flächenreinigungsgerät
- 62: Zusatzgerät
- 64: integrierte Einheit
- 66: Eingabeeinheit
- 68: Ausgabeeinheit
- 70: Gehäuse
- 72: Smartphone
- 74: Touchscreen
- 76: Steuereinheit
- 78: Speichereinheit
- 80: Datenverarbeitungseinrichtung
- 82: Steuereinheit
- 84: Speichereinheit
- 86: Cloud-Dienst
- 88: Kommunikationsglied
- 90: Doppelpfeil
- 92: Tablet-Computer
- 94: Smartwatch
- 96: Datenbrille
- 98: Digitalkamera
- 100: Erfassungseinheit
- 102, 104: Piktogramm
- 110: Hochdruckreinigungssystem
- 112, 128, 134, 138: Reinigungsempfehlung
- 114, 130, 132, 136, 140, 142: Piktogramm
- 116, 143: Symbol
- 118, 120, 124, 126: Interaktionselement
- 119: Bestätigungselement
- 121: Änderungselement
- 122: Drehregler
- 123: Schieberegler
- 125: Aufforderungselement
- 127: Erwerbselement
- 144: Fahrrad
- 146, 147, 148: Pfeil
- 149: Erfassungseinheit
- 150: Terrasse
- 152, 154: Bildinformation
- 156: Piktogramm
- 158: Reinigungsempfehlung
- 160, 162: Symbol
- 164: Piktogramm
- 166, 168, 169, 170: Interaktionselement
- 167: Bestätigungselement
- 172: Schaltfläche
- 174: Reinigungsempfehlung
- 176, 178, 180: Symbol
- 182, 184: Schaltfläche
- 186, 190: Interaktionselement
- 187, 191: Aufforderungselement
- 192: Symbol
- 194: Reinigungshinweis
- 196: Symbol
- 198: Interaktionselement
- 199: Aufforderungselement
- 200: Fortschrittselement

## Patentansprüche

1. Hochdruckreinigungssystem, umfassend ein Hochdruckreinigungsgerät (12), das ein Pumpaggregat (14) aufweist, mindestens ein Zubehörteil (38), das in Strömungsverbindung mit einem Hochdruckausgang (20) des Pumpaggregates (14) steht oder bringbar ist, wobei das Hochdruckreinigungsgerät (12) mit mindestens einem veränderbaren Betriebsparameter betreibbar ist, eine Eingabeeinheit (28, 66), mindestens eine mit der Eingabeeinheit (28, 66) gekoppelte Steuereinheit (32, 76, 82) und eine mit der mindestens einen Steuereinheit (32, 76, 82) gekoppelte Ausgabeeinheit (30, 68), wobei über die Eingabeeinheit (28, 66) ein zu reinigender Gegenstand vorgebbar ist und die Steuereinheit (32, 76, 82) derart ausgebildet ist, dass von der mindestens einen Steuereinheit (32, 76, 82) abhängig von der Vorgabe an der Ausgabeeinheit (30, 68) eine Reinigungsempfehlung (112, 128, 134, 138, 158, 174) bereitgestellt wird, umfassend einen Hinweis zur Verwendung eines Zubehörteils (38) und/oder den Wert mindestens eines Betriebsparameters, **dadurch gekennzeichnet, dass** die Steuereinheit (32, 76, 82) weiter derart ausgebildet ist, dass an der Ausgabeeinheit (30, 68) mit der Reinigungsempfehlung (112, 128, 134, 138, 158, 174) verknüpft mindestens ein Interaktionselement (118, 120, 124, 126, 166, 168, 169, 170, 186, 190, 198) für den Benutzer bereitgestellt wird, zum Übermitteln von Interaktionsinformationen an die mindestens eine Steuereinheit (32, 76, 82), abhängig von der Reinigungsempfehlung (112, 128, 134, 138, 158, 174).

2. Hochdruckreinigungssystem nach Anspruch 1, **dadurch gekennzeichnet, dass** das mindestens eine Interaktionselement (118, 120, 124, 126, 166, 168, 169, 170, 186, 190, 198) in Gestalt einer Schaltfläche, eines Auswahlelementes oder eines Dreh- oder Schiebereglers an der Ausgabeeinheit (30, 68) bereitstellbar ist, wobei die Ausgabeeinheit (30, 68) vorzugsweise eine Anzeigeeinheit ist, an der das mindestens eine Interaktionselement darstellbar ist.

3. Hochdruckreinigungssystem nach einem der voranstehenden Ansprüche, **dadurch gekennzeichnet, dass** zumindest eines der Folgenden gilt:
- das mindestens eine Interaktionselement (118, 120, 124, 126, 166, 168, 169, 170, 186, 190, 198) umfasst ein Bestätigungselement (119, 167), durch dessen Betätigung eine Bestätigungsinformation des Benutzers an die mindestens eine Steuereinheit (32, 76, 82) übertragbar ist;
- die Reinigungsempfehlung (112, 128, 134, 138, 158, 174) umfasst einen Hinweis betreffend den Wert mindestens eines Betriebsparameters, und das Hochdruckreinigungsgerät (12) ist bei Bestätigung durch das mindestens eine Interaktionselement (118, 120, 124, 126, 166, 168, 169, 170, 186, 190, 198) auf den Wert des mindestens einen Betriebsparameters einstellbar.

4. Hochdruckreinigungssystem nach einem der voranstehenden Ansprüche, **dadurch gekennzeichnet, dass** mehrere Reinigungsempfehlungen (112, 128, 134, 138, 158, 174) verbunden mit einem jeweiligen mindestens einen Interaktionselement (118, 120, 124, 126, 166, 168, 169, 170, 186, 190, 198) bereitstellbar sind und dass die Reinigungsempfehlungen (112, 128, 134, 138, 158, 174) zumindest einen Hinweis betreffend die Verwendung eines Zubehörteils (38) umfassen, wobei sich die Zubehörteile (38) verschiedener Reinigungsempfehlungen (112, 128, 134, 138, 158, 174) voneinander unterscheiden, und dass das jeweilige mindestens eine Interaktionselement (118, 120, 124, 126, 166, 168, 169, 170, 186, 190, 198) ein Bestätigungselement (119) oder ein Auswahlelement ausbildet, bei dessen Betätigung eine Information zur Verwendung des mit diesem Interaktionselement (118, 120, 124, 126, 166, 168, 169, 170, 186, 190, 198) verknüpften Zubehörteils (38) an die Steuereinheit (32, 76, 82) übertragbar ist.

5. Hochdruckreinigungssystem nach einem der voranstehenden Ansprüche, **dadurch gekennzeichnet, dass** zumindest eines der Folgenden gilt:
- das Hochdruckreinigungsgerät (12) ist auf den Wert des mindestens einen Betriebsparameters einstellbar, auch ohne vorherige Bestätigung oder Änderung durch den Benutzer;
- das mindestens eine Interaktionselement (118, 120, 124, 126, 166, 168, 169, 170, 186, 190, 198) ist zusammen mit der Reinigungsempfehlung (112, 128, 134, 138, 158, 174) an der Ausgabeeinheit (30, 68) bereitstellbar.

6. Hochdruckreinigungssystem nach einem der voranstehenden Ansprüche, **dadurch gekennzeichnet, dass** zumindest eines der Folgenden gilt:
- die Reinigungsempfehlung (112, 128, 134, 138, 158, 174) umfasst eine Mehrzahl von Zubehörteilen (38), insbesondere zur Verwendung zeitlich nacheinander, vorzugsweise gemäß Reinigungshinweisen (194), die von der mindestens einen Steuereinheit (32, 76, 82) an der Ausgabeeinheit (30, 68) bereitstellbar sind;
- das mindestens eine Interaktionselement (118, 120, 124, 126, 166, 168, 169, 170, 186, 190, 198) umfasst ein Aufforderungselement (125, 187, 191, 199), bei dessen Betätigung durch den Benutzer von der mindestens einen Steuereinheit (32, 76, 82) mindestens ein Reinigungshinweis (194), insbesondere eine Anleitung, zum Reinigen des Gegenstandes an der Ausgabeeinheit (30, 68) bereitstellbar ist.

7. Hochdruckreinigungssystem nach Anspruch 6, **dadurch gekennzeichnet, dass** zumindest eines der Folgenden gilt:
- aufeinanderfolgende Reinigungshinweise (194) sind an der Ausgabeeinheit (30, 68) in Form einer Schritt-für Schritt-Anleitung für den Benutzer zum Reinigen des Gegenstandes bereitstellbar;
- die Anleitung mit jeweiligen Interaktionselementen (118, 120, 124, 126, 166, 168, 169, 170, 186, 190, 198) ist für den Benutzer bereitstellbar, wobei bei Betätigung eines Interaktionselementes (118, 120, 124, 126, 166, 168, 169, 170, 186, 190, 198) der Reinigungshinweis (194) gemäß dem nachfolgenden Schritt der Anleitung bereitstellbar ist.

8. Hochdruckreinigungssystem nach Anspruch 6 oder 7, **dadurch gekennzeichnet, dass** Reinigungshinweise (194), die an der Ausgabeeinheit bereitstellbar sind, mindestens eines der Folgenden sind oder umfassen:
- Hinweis zum Einstellen des Hochdruckreinigungsgerätes (12), insbesondere unter Nutzung der Eingabeeinheit (28, 66);
- Hinweis zum Übertragen eines Wertes eines Betriebsparameters an das Hochdruckreinigungsgerät (12);
- Hinweis zur Führung eines Zubehörteils (38) beim Reinigen des Gegenstandes;
- Hinweis zum Anschließen eines Zubehörteils (38) an eine Bedieneinheit (24) oder das Hochdruckreinigungsgerät (12), zum Trennen eines Zubehörteils (38) und/oder zum Wechsel eines Zubehörteils (38);
- Hinweis betreffend die abgelaufene oder verbleibende Reinigungszeit, insbesondere die Nutzungsdauer mindestens eines Zubehörteils (38).

9. Hochdruckreinigungssystem nach einem der voranstehenden Ansprüche, **dadurch gekennzeichnet, dass** zumindest eines der Folgenden gilt:
- das Hochdruckreinigungssystem (10; 110) weist eine Speichereinheit (78, 84) auf, in der Reinigungsprofile hinterlegt sind, die, zu reinigenden Gegenständen zugeordnet, Reinigungsempfehlungen (112, 128, 134, 138, 158, 174) aufweisen, die eine Verknüpfung von Zubehörteilen (38) mit einem Wert mindestens eines Betriebsparameters aufweisen;
- der Wert mindestens eines Betriebsparameters dem Hochdruckreinigungsgerät (12) ist vom Benutzer über die Eingabeeinheit (28, 66) und/oder über eine Bedieneinheit (24) des Hochdruckreinigungsgerätes (12) vorgebbar.

10. Hochdruckreinigungssystem nach einem der voranstehenden Ansprüche, **dadurch gekennzeichnet, dass** als Zubehörteil (38) zumindest eines der Folgenden vorgesehen ist:
- eine Austragseinheit (44, 50) mit Flachstrahldüse;
- eine Austragseinheit (46, 52) mit Rotordüse;
- eine Austragseinheit (48) mit Niederdruck-Reinigungsmitteldüse;
- eine Austragsvorrichtung (42) umfassend zwei oder mehr Austragseinheiten (44, 46, 48), wobei die Reinigungsempfehlung (112, 128, 134, 138, 158, 174) die Nutzung einer bestimmten der Austragseinheiten (44, 46, 48) umfasst;
- ein Flächenreinigungsgerät (60);
- eine Waschbürste (54, 56);
- ein Behälter (34) für eine Reinigungschemikalie.

11. Hochdruckreinigungssystem nach einem der voranstehenden Ansprüche, **dadurch gekennzeichnet, dass** zumindest eines der Folgenden gilt:
- die Eingabeeinheit (28, 66), die Ausgabeeinheit (30, 68) und/oder die Steuereinheit (32, 76, 82) bilden eine integrierte Einheit (64) mit einem gemeinsamen Gehäuse (70) oder gemeinsamen Träger aus oder sind von einer derartigen integrierten Einheit (64) umfasst;
- die Eingabeeinheit (28, 66), die Ausgabeeinheit (30, 68), die Steuereinheit (32, 76, 82) oder die integrierte Einheit (64) ist ein portables externes Zusatzgerät (62) zum Hochdruckreinigungsgerät (12) oder von einem solchen umfasst, vorzugsweise **gekennzeichnet durch** ein auf dem externen Zusatzgerät (62) hinterlegtes und ausführbares Benutzeranwendungsprogramm zur Interaktion des Benutzers mit dem Hochdruckreinigungssystem (10; 110).

12. Hochdruckreinigungssystem nach einem der voranstehenden Ansprüche, **dadurch gekennzeichnet, dass** zumindest eines der Folgenden gilt:
- mindestens eine Steuereinheit (32, 76, 82) ist im Hochdruckreinigungsgerät (12) angeordnet oder von diesem umfasst;
- das Hochdruckreinigungssystem (10; 110) umfasst mindestens eine räumlich entfernt vom Hochdruckreinigungsgerät (12) angeordnete Datenverarbeitungseinrichtung (80), die mindestens eine Steuereinheit (32, 76, 82) umfasst.

13. Hochdruckreinigungssystem nach einem der voranstehenden Ansprüche, **dadurch gekennzeichnet, dass** der mindestens eine Betriebsparameter eines der Folgenden ist oder umfasst:
- einen Druck der Reinigungsflüssigkeit;
- eine Druckstufe des Pumpaggregates (14);
- einen Volumenstrom der Reinigungsflüssigkeit;
- eine Volumenstufe für Reinigungsflüssigkeit;
- ein Beimischverhältnis einer Reinigungschemikalie zur Reinigungsflüssigkeit;
- einen Arbeitsabstand des Zubehörteils (38) vom zu reinigenden Gegenstand;
- Nutzung mindestens einer bestimmten Düse des Zubehörteils (38) zum Abgeben der Reinigungsflüssigkeit;
- eine Nutzung eines Betriebsmodus mit vorübergehend erhöhtem Druck für die Reinigungsflüssigkeit.

14. Hochdruckreinigungssystem nach einem der voranstehenden Ansprüche, **dadurch gekennzeichnet, dass** das Hochdruckreinigungssystem (10; 110) eine Erfassungseinheit (100) zum Erfassen des Gegenstandes umfasst oder ausbildet und dass eine diesbezügliche Information der Erfassungseinheit (100) an die mindestens eine Steuereinheit (32, 76, 72) übertragbar ist und die mindestens eine Steuereinheit (32, 76, 82) ausgebildet ist, den Gegenstand und/oder dessen Beschaffenheit anhand der Informationen zu ermitteln, dass die Erfassungseinheit (100) eine Kamera (98) zum Erstellen mindestens einer Aufnahme des Gegenstandes umfasst und diesbezügliche Bildinformationen an die mindestens eine Steuereinheit (32, 76, 82) übertragbar sind, und dass die Steuereinheit (32, 76, 82) ausgebildet ist, den Gegenstand anhand der Bildinformationen zu ermitteln.

15. Hochdruckreinigungssystem nach einem der voranstehenden Ansprüche, **dadurch gekennzeichnet, dass** das Hochdruckreinigungssystem (10; 110) eine Speichereinheit (78, 84) umfasst und dass in der Speichereinheit (78, 84) ein Benutzerprofil des Benutzers speicherbar ist und dass mit dem Benutzerprofil verknüpfte Informationen von der mindestens einen Steuereinheit (76, 82) für die Erstellung der Reinigungsempfehlung (112, 128, 134, 138, 158, 174) berücksichtigbar sind.

16. Hochdruckreinigungssystem nach Anspruch 15, **dadurch gekennzeichnet, dass** zumindest eines der Folgenden gilt:
- über die Eingabeeinheit (28, 66) und die Ausgabeeinheit (30, 68) ist eine Schnittstelle für den Benutzer zur Interaktion mit dem Benutzerprofil bereitstellbar, insbesondere unter Nutzung eines Benutzeranwendungsprogrammes eines Zusatzgerätes (62), welches die Eingabeeinheit (28, 66) und die Ausgabeeinheit (30, 68) umfasst;
- mit dem Benutzerprofil ist mindestens ein individualisierter zu reinigender Gegenstand verknüpft in der Speichereinheit (78, 84) speicherbar , der der mindestens einen Steuereinheit (32, 76, 82) vom Benutzer vorgebbar ist, und die Reinigungsempfehlung (112, 128, 134, 138, 158, 174) ist für den individualisierten Gegenstand bereitstellbar;
- mit dem Benutzerprofil ist mindestens ein Zubehörteil (38) verknüpft und eine diesbezügliche Information ist in der Speichereinheit (78, 84) speicherbar und die Reinigungsempfehlung (112, 128, 134, 138, 158, 174) ist an den Benutzer nur auf Basis des hinterlegten mindestens einen Zubehörteils (38) bereitstellbar
- mit dem Benutzerprofil ist mindestens ein Zubehörteil (38) verknüpft und eine diesbezügliche Information ist in der Speichereinheit (78, 84) speicherbar und die Reinigungsempfehlung ist an den Benutzer unabhängig vom mindestens einen Zubehörteil (38) bereitstellbar
- mit dem Benutzerprofil ist ein Typ des Hochdruckreinigungsgerätes (12) verknüpft in der Speichereinheit (78, 84) speicherbar und die Reinigungsempfehlung (112, 128, 134, 138, 158, 174) ist abhängig vom Typ des Hochdruckreinigungsgerätes (12) bereitstellbar.

17. Hochdruckreinigungssystem nach einem der voranstehenden Ansprüche, **dadurch gekennzeichnet, dass** der Wert mindestens eines Betriebsparameters vom Hochdruckreinigungsgerät (12) beschränkbar ist, abhängig von dem in der Reinigungsempfehlung (112, 128, 134, 138, 158, 174) enthaltenen Zubehörteil (38).

18. Hochdruckreinigungssystem nach einem der voranstehenden Ansprüche, **dadurch gekennzeichnet, dass** von einer Steuereinheit (32, 76, 82) des Hochdruckreinigungsgerätes (12) bei dessen Benutzung feststellbar ist, welcher Wert mindestens eines Betriebsparameters genutzt wird und/oder welches Zubehörteil (38) verwendet wird, insbesondere dass der Wert mindestens eines Betriebsparameters vom Hochdruckreinigungsgerät (12) beschränkbar ist, abhängig von verwendeten Zubehörteil (38).

19. Hochdruckreinigungssystem nach einem der voranstehenden Ansprüche, **dadurch gekennzeichnet, dass** von der Steuereinheit (32, 76, 82) des Hochdruckreinigungsgerätes (12) feststellbar ist, ob der Wert mindestens eines Betriebsparameters und/oder das verwendete Zubehörteil (38) von der Reinigungsempfehlung abweicht, und dass in diesem Fall mindestens eines der Folgenden durchführbar ist:
- Bereitstellen eines Hinweises an den Benutzer, vorzugsweise am Hochdruckreinigungsgerät (12), an einer Bedieneinheit (24) des Hochdruckreinigungsgerätes (12) und/oder an der Ausgabeeinheit (30, 68);
- Deaktivieren des Hochdruckreinigungsgerätes (12) oder des Pumpaggregates (14);
- Verändern des Wertes des mindestens einen Betriebsparameters am Hochdruckreinigungsgerät (12), vorzugsweise Einstellen des Wertes des Betriebsparameters gemäß der Reinigungsempfehlung;
- Verringern des Wertes des mindestens einen Betriebsparameters am Hochdruckreinigungsgerät (12), sofern der Wert des Betriebsparameters den Wert gemäß der Reinigungsempfehlung übersteigt;
- Übermitteln einer Information betreffend die Abweichung an eine Speichereinheit (78, 84) und Speicherung der Informationen in der Speichereinheit (78, 84).

20. Verfahren zum Betreiben eines Hochdruckreinigungssystems umfassend ein Hochdruckreinigungsgerät (12), das ein Pumpaggregat (14) aufweist, mindestens ein Zubehörteil (38), das in Strömungsverbindung mit einem Hochdruckausgang (20) des Pumpaggregates (14) steht oder bringbar ist, wobei das Hochdruckreinigungsgerät (12) mit mindestens einem veränderbaren Betriebsparameter betreibbar ist, wobei ein Benutzer einer Steuereinheit (32, 76, 82) über eine Eingabeeinheit (28, 66) einen zu reinigenden Gegenstand vorgibt und die Steuereinheit (32, 76, 82) abhängig von der Vorgabe an einer Ausgabeeinheit (30, 68) eine Reinigungsempfehlung bereitstellt, umfassend einen Hinweis zur Verwendung eines Zubehörteil (38) und/oder den Wert mindestens eines Betriebsparameters, **dadurch gekennzeichnet, dass** an der Ausgabeeinheit (30, 68) mit der Reinigungsempfehlung verknüpft mindestens ein Interaktionselement (118, 120, 124, 126, 166, 168, 169, 170, 186, 190, 198) für den Benutzer bereitgestellt wird, zum Übermitteln von Interaktionsinformationen an die mindestens eine Steuereinheit (32, 76, 82), abhängig von der Reinigungsempfehlung.

## Claims

1. High pressure cleaning system, comprising a high pressure cleaning appliance (12) that has a pump assembly (14), at least one accessory (38) that is in or is bringable into flow connection with a high pressure outlet (20) of the pump assembly (14), wherein the high pressure cleaning appliance (12) is operable with at least one variable operating parameter, an input unit (28, 66), at least one control unit (32, 76, 82) coupled to the input unit (28, 66), and an output unit (30, 68) coupled to the at least one control unit (32, 76, 82), wherein an object to be cleaned is specifiable by way of the input unit (28, 66) and the control unit (32, 76, 82) is configured in such a manner that a cleaning recommendation (112, 128, 134, 138, 158, 174) is provided on the output unit (30, 68) by the at least one control unit (32, 76, 82) in dependence on the specification, said cleaning recommendation comprising an instruction for using an accessory (38) and/or the value of at least one operating parameter, **characterized in that** the control unit (32, 76, 82) is further configured in such a manner that at least one interaction element (118, 120, 124, 126, 166, 168, 169, 170, 186, 190, 198) is provided for the user, linked to the cleaning recommendation (112, 128, 134, 138, 158, 174), on the output unit (30, 68) for transmitting interaction information to the at least one control unit (32, 76, 82), in dependence on the cleaning recommendation (112, 128, 134, 138, 158, 174).

2. High pressure cleaning system in accordance with Claim 1, **characterized in that** the at least one interaction element (118, 120, 124, 126, 166, 168, 169, 170, 186, 190, 198) is providable in the form of a button, a selection element, or a rotary or slide control on the output unit (30, 68), wherein the output unit (30, 68) is preferably a display unit on which the at least one interaction element is displayable.

3. High pressure cleaning system in accordance with any one of the preceding Claims, **characterized in that** at least one of the following applies:
- the at least one interaction element (118, 120, 124, 126, 166, 168, 169, 170, 186, 190, 198) comprises a confirmation element (119, 167) by the actuation of which a confirmation information of the user is transmittable to the at least one control unit (32, 76, 82);
- the cleaning recommendation (112, 128, 134, 138, 158, 174) comprises an indication relating to the value of at least one operating parameter and the high pressure cleaning appliance (12) is settable to the value of the at least one operating parameter upon confirmation by the at least one interaction element (118, 120, 124, 126, 166, 168, 169, 170, 186, 190, 198).

4. High pressure cleaning system in accordance with any one of the preceding Claims, **characterized in that** a plurality of cleaning recommendations (112, 128, 134, 138, 158, 174) are providable connected to a respective at least one interaction element (118, 120, 124, 126, 166, 168, 169, 170, 186, 190, 198) and **in that** the cleaning recommendations (112, 128, 134, 138, 158, 174) comprise at least one instruction relating to the use of an accessory (38), wherein the accessories (38) of different cleaning recommendations (112, 128, 134, 138, 158, 174) differ from one another, and **in that** the respective at least one interaction element (118, 120, 124, 126, 166, 168, 169, 170, 186, 190, 198) forms a confirmation element (119) or a selection element, upon the actuation of which information for using the accessory (38) linked to said interaction element (118, 120, 124, 126, 166, 168, 169, 170, 186, 190, 198) is transmittable to the control unit (32, 76, 82).

5. High pressure cleaning system in accordance with any one of the preceding Claims, **characterized in that** at least one of the following applies:
- the high pressure cleaning appliance (12) is settable to the value of the at least one operating parameter, even without prior confirmation or change by the user;
- the at least one interaction element (118, 120, 124, 126, 166, 168, 169, 170, 186, 190, 198) together with the cleaning recommendation (112, 128, 134, 138, 158, 174) is providable on the output unit (30, 68).

6. High pressure cleaning system in accordance with any one of the preceding Claims, **characterized in that** at least one of the following applies:
- the cleaning recommendation (112, 128, 134, 138, 158, 174) comprises a plurality of accessories (38), in particular for use in chronological succession, preferably according to cleaning instructions (194) that are providable on the output unit (30, 68) by the at least one control unit (32, 76, 82);
- the at least one interaction element (118, 120, 124, 126, 166, 168, 169, 170, 186, 190, 198) comprises a request element (125, 187, 191, 199), upon actuation of which by the user at least one cleaning instruction (194), in particular a guide, for cleaning the object is providable on the output unit (30, 68) by the at least one control unit (32, 76, 82).

7. High pressure cleaning system in accordance with Claim 6, **characterized in that** at least one of the following applies:
- successive cleaning instructions (194) are providable on the output unit (30, 68) in the form of a step-by-step guide for the user for cleaning the object;
- the guide is providable for the user with respective interaction elements (118, 120, 124, 126, 166, 168, 169, 170, 186, 190, 198), wherein the cleaning instruction (194) according to the subsequent step of the guide is providable upon actuation of an interaction element (118, 120, 124, 126, 166, 168, 169, 170, 186, 190, 198).

8. High pressure cleaning system in accordance with Claim 6 or Claim 7, **characterized in that** cleaning instructions (194) that are providable on the output unit are or comprise at least one of the following:
- instruction for setting the high pressure cleaning appliance (12), in particular using the input unit (28, 66);
- instruction for transmitting a value of an operating parameter to the high pressure cleaning appliance (12);
- instruction for guiding an accessory (38) upon cleaning the object;
- instruction for connecting an accessory (38) to an operating element (24) or the high pressure cleaning appliance (12), for disconnecting an accessory (38), and/or for exchanging an accessory (38);
- instruction relating to the expired or remaining cleaning time, in particular the useful life of at least one accessory (38).

9. High pressure cleaning system in accordance with any one of the preceding Claims, **characterized in that** at least one of the following applies:
- the high pressure cleaning system (10; 110) has a storage unit (78, 84) in which cleaning profiles are saved, which have cleaning recommendations (112, 128, 134, 138, 158, 174) associated with objects to be cleaned, said cleaning recommendations having a linking of accessories (38) to a value of at least one operating parameter;
- the value of at least one operating parameter is providable to the high pressure cleaning appliance (12) by the user via the input unit (28, 66) and/or via an operating unit (24) of the high pressure cleaning appliance (12).

10. High pressure cleaning system in accordance with any one of the preceding Claims, **characterized in that** at least one of the following is provided as an accessory (38):
- a discharge unit (44, 50) with a flat jet nozzle;
- a discharge unit (46, 52) with a rotor nozzle;
- a discharge unit (48) with a low pressure cleaning agent nozzle;
- a discharge device (42) comprising two or more discharge units (44, 46, 48), wherein the cleaning recommendation (112, 128, 134, 138, 158, 174) comprises the use of a particular one of the discharge units (44, 46, 48);
- a surface cleaning device (60);
- a washing brush (54, 56);
- a container (34) for a cleaning chemical.

11. High pressure cleaning system in accordance with any one of the preceding Claims, **characterized in that** at least one of the following applies:
- the input unit (28, 66), the output unit (30, 68), and/or the control unit (32, 76, 82) form an integrated unit (64) with a common housing (70) or common support or are comprised by such an integrated unit (64);
- the input unit (28, 66), the output unit (30, 68), the control unit (32, 76, 82) or the integrated unit (64) is or is comprised by a portable external accessory device (62) to the high pressure cleaning appliance (12), preferably **characterized by** a user application program that is stored on and is executable on the external accessory device (62) for interaction by the user with the high pressure cleaning system (10; 110).

12. High pressure cleaning system in accordance with any one of the preceding Claims, **characterized in that** at least one of the following applies:
- at least one control unit (32, 76, 82) is arranged in or comprised by the high pressure cleaning appliance (12);
- the high pressure cleaning system (10; 110) comprises at least one data processing device (80), which is arranged spatially remote from the high-pressure cleaning appliance (12) and comprises at least one control unit (32, 76, 82).

13. High pressure cleaning system in accordance with any one of the preceding Claims, **characterized in that** the at least one operating parameter is or comprises one of the following:
- a pressure of the cleaning liquid;
- a pressure level of the pump assembly (14);
- a volumetric flow of the cleaning liquid;
- a volume level for cleaning liquid;
- an admixing ratio of a cleaning chemical to the cleaning liquid;
- a working distance of the accessory (38) from the object to be cleaned;
- use of at least one particular nozzle of the accessory (38) for discharge the cleaning liquid;
- a use of an operating mode with temporarily increased pressure for the cleaning liquid.

14. High pressure cleaning system in accordance with any one of the preceding Claims, **characterized in that** the high pressure cleaning system (10; 110) comprises or forms a detection unit (100) for detecting the object and **in that** information from the detection unit (100) relating thereto is transmittable to the at least one control unit (32, 76, 72) and the at least one control unit (32, 76, 82) is configured to determine the object and/or its quality on the basis of the information, **in that** the detection unit (100) comprises a camera (98) for creating at least one image of the object and image information relating thereto is transmittable to the at least one control unit (32, 76, 82), and **in that** the control unit (32, 76, 82) is configured to determine the object on the basis of the image information.

15. High pressure cleaning system in accordance with any one of the preceding Claims, **characterized in that** the high pressure cleaning system (10; 100) comprises a storage unit (78, 84) and **in that** a user profile of the user is storable in the storage unit (78, 84) and **in that** information linked to the user profile can be considered by the at least one control unit (76, 82) for the creation of the cleaning recommendation (112, 128, 134, 138, 158, 174).

16. High pressure cleaning system in accordance with Claim 15, **characterized in that** at least one of the following applies:
- an interface for the user for interacting with the user profile is providable by way of the input unit (28, 66) and the output unit (30, 68), in particular using a user application program of an accessory device (62), which comprises the input unit (28, 66) and the output unit (30, 68);
- at least one individualized object to be cleaned is storable, linked to the user profile, in the storage unit (78, 84), said object being specifiable to the at least one control unit (32, 76, 82) by the user, and **in that** the cleaning recommendation (112, 128, 134, 138, 158, 174) is providable for the individualized object;
- at least one accessory (38) is linked to the user profile and information relating thereto is storable in the storage unit (78, 84) and **in that** the cleaning recommendation (112, 128, 134, 138, 158, 174) is providable to the user only on the basis of the saved at least one accessory (38);
- at least one accessory (38) is linked to the user profile and information relating thereto is storable in the storage unit (78, 84) and **in that** the cleaning recommendation is providable to the user independently of the at least one accessory (38);
- the type of high pressure cleaning appliance (12) is storable, linked to the user profile, in the storage unit (78, 84) and **in that** the cleaning recommendation (112, 128, 134, 138, 158, 174) is providable in dependence on the type of high pressure cleaning appliance (12).

17. High pressure cleaning system in accordance with any one of the preceding Claims, **characterized in that** the value of at least one operating parameter is limitable by the high pressure cleaning appliance (12), in dependence on the accessory (38) contained in the cleaning recommendation (112, 128, 134, 138, 158, 174).

18. High pressure cleaning system in accordance with any one of the preceding Claims, **characterized in that** it is determinable by a control unit (32, 76, 82) of the high pressure cleaning appliance (12) during the use thereof which value of at least one operating parameter is used and/or which accessory (38) is used, in particular **in that** the value of at least one operating parameter is limitable by the high pressure cleaning appliance (12), in dependence on the accessory (38) used.

19. High pressure cleaning system in accordance with any one of the preceding Claims, **characterized in that** it is determinable by the control unit (32, 76, 82) of the high pressure cleaning appliance (12) whether the value of at least one operating parameter and/or the accessory (38) used deviates from the cleaning recommendation, and **in that** in this case at least one of the following is performable:
- providing an indication to the user, preferably on the high pressure cleaning appliance (12), on an operating unit (24) of the high pressure cleaning appliance (12) and/or on the output unit (30, 68);
- deactivating the high pressure cleaning appliance (12) or the pump assembly (14);
- changing the value of the at least one operating parameter on the high pressure cleaning appliance (12), preferably setting the value of the operating parameter in accordance with the cleaning recommendation;
- reducing the value of the at least one operating parameter on the high pressure cleaning appliance (12), provided the value of the operating parameter exceeds the value in accordance with the cleaning recommendation;
- transmitting information relating to the deviation to a storage unit (78, 84) and storing the information in the storage unit (78, 84).

20. Method for operating a high pressure cleaning system comprising a high pressure cleaning appliance (12) that has a pump assembly (14), at least one accessory (38) that is in or is bringable into flow connection with a high pressure outlet (20) of the pump assembly (14), wherein the high pressure cleaning appliance (12) is operable with at least one variable operating parameter, wherein a user specifies an object to be cleaned to a control unit (32, 76, 82) by way of an input unit (28, 66) and the control unit (32, 76, 82) provides a cleaning recommendation on an output unit (30, 68) in dependence on the specification, comprising an instruction for using an accessory (38) and/or the value of at least one operating parameter, **characterized in that** at least one interaction element (118, 120, 124, 126, 166, 168, 169, 170, 186, 190, 198) is provided for the user, linked to the cleaning recommendation, on the output unit (30, 68) for transmitting interaction information to the at least one control unit (32, 76, 82), in dependence on the cleaning recommendation.

## Revendications

1. Système de nettoyage haute pression, comprenant un appareil de nettoyage haute pression (12) qui comprend un groupe de pompage (14), au moins une partie d'accessoire (38) qui est ou peut être mis en liaison d'écoulement avec une sortie de haute pression (20) du groupe de pompage (14), dans lequel l'appareil de nettoyage haute pression (12) peut fonctionner avec au moins un paramètre de fonctionnement variable, une unité d'entrée (28, 66), au moins une unité de commande (32, 76, 82) couplée avec l'unité d'entrée (28, 66) et une unité de sortie (30, 68) couplée avec l'au moins une unité de commande (32, 76, 82), dans lequel, par l'intermédiaire de l'unité d'entrée (28, 66), un objet à nettoyer peut être prédéfini et l'unité de commande (32, 76, 82) est conçue de sorte que l'au moins une unité de commande (32, 76, 82) met à disposition, en fonction de la prédéfinition au niveau de l'unité de sortie (30, 68), une recommandation de nettoyage (112, 128, 134, 138, 158, 174), comprenant une instruction concernant l'utilisation d'une partie d'accessoire (38) et/ou la valeur d'au moins un paramètre de fonctionnement, **caractérisé en ce que** l'unité de commande (32, 76, 82) est en outre conçue de sorte que, au niveau de l'unité de sortie (30, 68), combiné à la recommandation de nettoyage (112, 128, 134, 138, 158, 174), au moins un élément d'interaction (118, 120, 124, 126, 166, 168, 169, 170, 186, 190, 198) est mis à la disposition de l'utilisateur, pour la transmission d'informations d'interaction à l'au moins une unité de commande (32, 76, 82), en fonction de la recommandation de nettoyage (112, 128, 134, 138, 158, 174).

2. Système de nettoyage haute pression selon la revendication 1, **caractérisé en ce que** l'au moins un élément d'interaction (118, 120, 124, 126, 166, 168, 169, 170, 186, 190, 198) peut être mis à disposition sous la forme d'une surface de commutation, d'un sélecteur ou d'un potentiomètre ou d'un curseur sur l'unité de sortie (30, 68), dans lequel l'unité de sortie (30, 68) est de préférence une unité d'affichage sur laquelle peut être représentée au moins un élément d'interaction.

3. Système de nettoyage haute pression selon l'une des revendications précédentes, **caractérisé en ce qu'**au moins une des affirmations suivantes est valable :
- l'au moins un élément d'interaction (118, 120, 124, 126, 166, 168, 169, 170, 186, 190, 198) comprend un élément de conformation (119, 167) par l'intermédiaire de l'actionnement duquel une information de confirmation de l'utilisateur peut être transmise à l'au moins une unité de commande (32, 76, 82) ;
- la recommandation de nettoyage (112, 128, 134, 138, 158, 174) comprend une instruction concernant la valeur d'au moins un paramètre de fonctionnement et l'appareil de nettoyage haute pression (12) peut être réglé, lors de la confirmation, par l'au moins un élément d'interaction (118, 120, 124, 126, 166, 168, 169, 170, 186, 190, 198), à la valeur de l'au moins un paramètre de fonctionnement.

4. Système de nettoyage haute pression selon l'une des revendications précédentes, **caractérisé en ce que** plusieurs recommandations de nettoyage (112, 128, 134, 138, 158, 174), liées chacune à au moins un élément d'interaction (118, 120, 124, 126, 166, 168, 169, 170, 186, 190, 198), peuvent être mises à disposition, et **en ce que** les recommandations de nettoyage (112, 128, 134, 138, 158, 174) comprennent au moins une instruction concernant l'utilisation d'une partie d'accessoire (38), dans lequel les parties d'accessoires (38) de différentes recommandations de nettoyage (112, 128, 134, 138, 158, 174) sont différentes les unes des autres, et **en ce que** l'au moins un élément d'interaction (118, 120, 124, 126, 166, 168, 169, 170, 186, 190, 198) respectif constitue un élément de confirmation (119) ou un élément de sélection lors de l'actionnement duquel une information concernant l'utilisation de la partie d'accessoire (38) associée à cet élément d'interaction (118, 120, 124, 126, 166, 168, 169, 170, 186, 190, 198) peut être transmise à l'unité de commande (32, 76, 82).

5. Système de nettoyage haute pression selon l'une des revendications précédentes, **caractérisé en ce qu'**au moins une des affirmations suivantes est valable :
- l'appareil de nettoyage haute pression (12) peut être réglé à la valeur de l'au moins un paramètre de fonctionnement même sans confirmation ou modification préalable par l'utilisateur ;
- l'au moins un élément d'interaction (118, 120, 124, 126, 166, 168, 169, 170, 186, 190, 198) peut être mis à disposition au niveau de l'unité de sortie (30, 68) conjointement avec la recommandation de nettoyage (112, 128, 134, 138, 158, 174).

6. Système de nettoyage haute pression selon l'une des revendications précédentes, **caractérisé en ce qu'**au moins une des affirmations suivantes est valable :
- la recommandation de nettoyage (112, 128, 134, 138, 158, 174) comprend une pluralité de parties d'accessoires (38), plus particulièrement pour une utilisation de manière séquentielle les uns après les autres, de préférence selon des instructions de nettoyage (194) qui peuvent être mises à disposition par l'au moins une unité de commande (32, 76, 82) au niveau de l'unité de sortie (30, 68) ;
- l'au moins un élément d'interaction (118, 120, 124, 126, 166, 168, 169, 170, 186, 190, 198) comprend un élément de demande (125, 187, 191, 199) qui lors de son actionnement par l'utilisateur, fait en sorte que l'au moins une unité de commande (32, 76, 82) met à disposition une instruction de nettoyage (194), plus particulièrement une directive, pour le nettoyage de l'objet, au niveau de l'unité de sortie (30, 68).

7. Système de nettoyage haute pression selon la revendication 6, **caractérisé en ce qu'**au moins une des affirmations suivantes est valable :
- des instructions de nettoyage (194) successives peuvent être mises à la disposition de l'utilisateur au niveau de l'unité de sortie (30, 68) sous la forme d'une instruction pas-à-pas pour le nettoyage de l'objet ;
- l'instruction peut être mise à la disposition de l'utilisateur avec des éléments d'interaction (118, 120, 124, 126, 166, 168, 169, 170, 186, 190, 198) respectifs, dans lequel, lors de l'actionnement d'un élément d'interaction (118, 120, 124, 126, 166, 168, 169, 170, 186, 190, 198), l'instruction de nettoyage (194) peut être mise à disposition selon l'étape suivante de la directive.

8. Système de nettoyage haute pression selon la revendication 6 ou 7, **caractérisé en ce que** les instructions de nettoyage (194) qui peuvent être mises à disposition au niveau de l'unité de sortie sont ou comprennent au moins un des éléments suivants :
- instruction pour le réglage de l'appareil de nettoyage haute pression (12), plus particulièrement à l'aide de l'unité d'entrée (28, 66) ;
- instruction pour la transmission d'une valeur d'un paramètre de fonctionnement à l'appareil de nettoyage haute pression (12) ;
- instruction pour le guidage d'une partie d'accessoire (38) lors du nettoyage de l'objet ;
- instruction pour le raccordement d'une partie d'accessoire (38) à une unité de contrôle (24) ou à l'appareil de nettoyage haute pression (12), pour la séparation de la partie d'accessoire (38) et/ou pour le changement d'une partie d'accessoire (38) ;
- indication concernant le temps de nettoyage écoulé ou restant, plus particulièrement la durée d'utilisation d'au moins une partie d'accessoire (38).

9. Système de nettoyage haute pression selon l'une des revendications précédentes, **caractérisé en ce qu'**au moins une des affirmations suivantes est valable :
- le système de nettoyage haute pression (10 ; 110) comprend une unité d'enregistrement (78, 84) dans laquelle des profils de nettoyage sont enregistrés qui comprennent des recommandations de nettoyage (112, 128, 134, 138, 158, 174) correspondant à des objets à nettoyer, qui comprennent une association de parties d'accessoire (38) avec une valeur d'au moins un paramètre de fonctionnement ;
- la valeur d'au moins un paramètre de fonctionnement pour l'appareil de nettoyage haute pression (12) peut être prédéterminée par l'utilisateur par l'intermédiaire de l'unité d'entrée (28, 66) et/ou par l'intermédiaire d'une unité de contrôle (24) de l'appareil de nettoyage haute pression (12).

10. Système de nettoyage haute pression selon l'une des revendications précédentes, **caractérisé en ce que** la partie d'accessoire (38) est au moins un des éléments suivants :
- une unité de décharge (44, 50) avec buse à jet plat ;
- une unité de décharge (46, 52) avec buse à rotor ;
- une unité de décharge (48) avec buse de nettoyage basse pression ;
- un dispositif de décharge (42) comprenant deux unités de décharge (44, 46, 48) ou plus, dans lequel la recommandation de nettoyage (112, 128, 134, 138, 158, 174) comprend l'utilisation d'une unité de décharge (44, 46, 48) déterminée ;
- un appareil de nettoyage de surfaces (60) ;
- une brosse de lavage (54, 56) ;
- un récipient (34) pour un produit chimique de nettoyage.

11. Système de nettoyage haute pression selon l'une des revendications précédentes, **caractérisé en ce qu'**au moins une des affirmations suivantes est valable :
- l'unité d'entrée (28, 66), l'unité de sortie (30, 68) et/ou l'unité de commande (32, 76, 82) constituent une unité intégrée (64) avec un boîtier commun (70) ou un support commun ou sont inclus dans une telle unité intégrée (64) ;
- l'unité d'entrée (28, 66), l'unité de sortie (30, 68), l'unité de commande (32, 76, 82) ou l'unité intégrée (64) est un appareil externe portatif supplémentaire (62) pour l'appareil de nettoyage haute pression (12) ou est inclus dans celui-ci, de préférence **caractérisé par** un programme d'application d'utilisateur, enregistré sur l'appareil externe portatif supplémentaire (62) et exécutable, pour l'interaction de l'utilisateur avec le système de nettoyage haute pression (10 ; 110).

12. Système de nettoyage haute pression selon l'une des revendications précédentes, **caractérisé en ce qu'**au moins une des affirmations suivantes est valable :
- au moins une unité de commande (32, 76, 82) est disposée dans l'appareil de nettoyage haute pression (12) ou est incluse dans celui-ci ;
- le système de nettoyage haute pression (10 ; 110) comprend au moins un dispositif de traitement de données (80) disposé de manière physiquement éloignée de l'appareil de nettoyage haute pression (12), qui comprend l'au moins une unité de commande (32, 76, 82).

13. Système de nettoyage haute pression selon l'une des revendications précédentes, **caractérisé en ce que** l'au moins un paramètre de fonctionnement est ou comprend au moins un des éléments suivants :
- une pression du liquide de nettoyage ;
- un niveau de pression du groupe de pompage (14) ;
- un débit volumique du liquide de nettoyage ;
- un niveau de volume pour le liquide de nettoyage ;
- un rapport de mélange d'un produit chimique de nettoyage avec le liquide de nettoyage ;
- une distance de travail de la partie d'accessoire (38) par rapport à l'objet à nettoyer ;
- l'utilisation d'au moins une buse déterminée de la partie d'accessoire (38) pour la sortie du liquide de nettoyage ;
- une utilisation d'un mode de fonctionnement avec une pression augmentée provisoirement pour le liquide de nettoyage.

14. Système de nettoyage haute pression selon l'une des revendications précédentes, **caractérisé en ce que** le système de nettoyage haute pression (10 ; 110) comprend ou constitue une unité de détection (100) pour la détection de l'objet et **en ce qu'**une information correspondant de l'unité de détection (100) peut être transmise à l'au moins une unité de commande (32, 76, 72) et l'au moins une unité de commande (32, 76, 82) est conçue pour déterminer l'objet et/ou ses caractéristiques à l'aide des informations, **en ce que** l'unité de détection (100) comprend une caméra (98) pour la production d'au moins une prise de vue de l'objet et les informations d'image correspondantes peuvent être transmises à l'au moins une unité de commande (32, 76, 82) et **en ce que** l'unité de commande (32, 76, 82) est conçue pour déterminer l'objet à partir des informations de l'image.

15. Système de nettoyage haute pression selon l'une des revendications précédentes, **caractérisé en ce que** le système de nettoyage haute pression (10 ; 110) comprend une unité d'enregistrement (78, 84) et **en ce que**, dans l'unité d'enregistrement (78, 84), un profil d'utilisateur peut être enregistré et **en ce que** les informations associées au profil d'utilisateur peuvent être prises en compte par l'au moins une unité de commande (76, 82) pour l'élaboration de la recommandation de nettoyage (112, 128, 134, 138, 158, 174).

16. Système de nettoyage haute pression selon la revendication 15, **caractérisé en ce qu'**au moins une des affirmations suivantes est valable :
- par l'intermédiaire de l'unité d'entrée (28, 66) et de l'unité de sortie (30, 68), une interface peut être mise à la disposition de l'utilisateur pour une interaction avec le profil d'utilisateur, plus particulièrement à l'aide d'un programme d'application d'utilisateur d'un appareil supplémentaire (62), qui comprend l'unité d'entrée (28, 66) et l'unité de sortie (30, 68) ;
- au moins un objet à nettoyage personnalisé associé au profil d'utilisateur peut être enregistré dans l'unité d'enregistrement (78, 84), qui peut être prédéfini par l'utilisateur dans l'au moins une unité de commande (32, 76, 82) et la recommandation de nettoyage (112, 128, 134, 138, 158, 174) peut être mise à disposition pour l'objet personnalisé ;
- au moins une partie d'accessoire (38) associée au profil d'utilisateur et une information correspondante peut être enregistrée dans l'unité d'enregistrement (78, 84) et la recommandation de nettoyage (112, 128, 134, 138, 158, 174) peut être mise à la disposition de l'utilisateur uniquement sur la base de l'au moins une partie d'accessoire (38) enregistrée ;
- au moins une partie d'accessoire (38) associée au profil d'utilisateur et une information correspondante peut être enregistrée dans l'unité d'enregistrement (78, 84) et la recommandation de nettoyage peut être mise à la disposition de l'utilisateur par l'au moins une partie d'accessoire (38) ;
- un type d'appareil de nettoyage haute pression (12) associé au profil d'utilisateur peut être enregistré dans l'unité d'enregistrement (78, 84) et la recommandation de nettoyage (112, 128, 134, 138, 158, 174) peut être mise à disposition en fonction du type d'appareil de nettoyage haute pression (12).

17. Système de nettoyage haute pression selon l'une des revendications précédentes, **caractérisé en ce que** la valeur d'au moins un paramètre de fonctionnement peut être limitée par l'appareil de nettoyage haute pression (12) en fonction de la partie d'accessoire (38) contenue dans la recommandation de nettoyage (112, 128, 134, 138, 158, 174).

18. Système de nettoyage haute pression selon l'une des revendications précédentes, **caractérisé en ce qu'**une unité de commande (32, 76, 82) de l'appareil de nettoyage haute pression (12) peut déterminer, lors de son utilisation, quelle valeur d'au moins un paramètre de fonctionnement est utilisée et/ou quelle partie d'accessoire (38) est utilisée, plus particulièrement **en ce que** la valeur d'au moins un paramètre de fonctionnement peut être limitée par l'appareil de nettoyage haute pression (12) en fonction de la partie d'accessoire (38) utilisée.

19. Système de nettoyage haute pression selon l'une des revendications précédentes, **caractérisé en ce qu'**une unité de commande (32, 76, 82) de l'appareil de nettoyage haute pression (12) peut déterminer si la valeur d'au moins un paramètre de fonctionnement et/ou la partie d'accessoire (38) utilisée diffère de la recommandation de nettoyage et **en ce que**, dans ce cas, au moins une des opérations suivantes peut être exécutée :
- mise d'une instruction à la disposition de l'utilisateur, de préférence sur l'appareil de nettoyage haute pression (12), au niveau d'une unité de contrôle (24) de l'appareil de nettoyage haute pression (12) et/ou au niveau de l'unité de sortie (30, 68) ;
- désactivation de l'appareil de nettoyage haute pression (12) ou du groupe de pompage (14) ;
- modification de la valeur de l'au moins un paramètre de fonctionnement au niveau de l'appareil de nettoyage haute pression (12), de préférence réglage de la valeur du paramètre de fonctionnement selon la recommandation de nettoyage ;
- diminution de la valeur de l'au moins un paramètre de fonctionnement au niveau de l'appareil de nettoyage haute pression (12) si la valeur du paramètre de fonctionnement dépasse la valeur selon la recommandation de nettoyage ;
- transmission d'une information concernant cet écart à une unité d'enregistrement (78, 84) et enregistrement des informations dans l'unité d'enregistrement (78, 84).

20. Procédé de fonctionnement d'un système de nettoyage haute pression comprenant un appareil de nettoyage haute pression (12), qui comprend un groupe de pompage (14), au moins une partie d'accessoire (38), qui est ou peut être mis en liaison d'écoulement avec une sortie de haute pression (20) du groupe de pompage (14), dans lequel l'appareil de nettoyage haute pression (12) peut fonctionner avec au moins un paramètre de fonctionnement variable, dans lequel un utilisateur d'une unité de commande (32, 76, 82) prédéfinit, par l'intermédiaire d'une unité d'entrée (28, 66), un objet à nettoyer et l'unité de commande (32, 76, 82) met à disposition, en fonction de cette prédéfinition, au niveau de l'unité de sortie (30, 68), une recommandation de nettoyage comprenant une instruction pour l'utilisation d'une partie d'accessoire (38) et/ou la valeur d'au moins un paramètre de fonctionnement, **caractérisé en ce que**, au niveau de l'unité de sortie (30, 68), associé à la recommandation de nettoyage, un élément d'interaction (118, 120, 124, 126, 166, 168, 169, 170, 186, 190, 198) est mise à la disposition de l'utilisateur pour la transmission d'informations d'interaction à l'au moins une unité de commande (32, 76, 82) en fonction de la recommandation de nettoyage.
